(19) Europäisches Patentamt
European Patent Office
Office européen des brevets

(11) EP 2 042 579 A1

(12) **EUROPÄISCHE PATENTANMELDUNG**

(43) Veröffentlichungstag:
**01.04.2009 Patentblatt 2009/14**

(51) Int Cl.:
***C09J 7/02*** *(2006.01)* ***C09J 9/00*** *(2006.01)*
***B32B 17/10*** *(2006.01)* ***B32B 27/06*** *(2006.01)*

(21) Anmeldenummer: **08161159.2**

(22) Anmeldetag: **25.07.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **20.09.2007 DE 102007045168**

(71) Anmelder: **Tesa AG**
**20253 Hamburg (DE)**

(72) Erfinder:
- **Husemann, Marc**
**22605 Hamburg (DE)**
- **Dalmis, Gabriel**
**22459 Hamburg (DE)**

(54) **Transparentes Klebeband**

(57) Vorgestellt wird ein Aufbau für ein einseitig verklebbares hochtransparentes Flächenelement mit einem Träger und einer Klebemasse, das als Splittersicherungseinrichtung für spröde Flächenkörper eingesetzt wird.

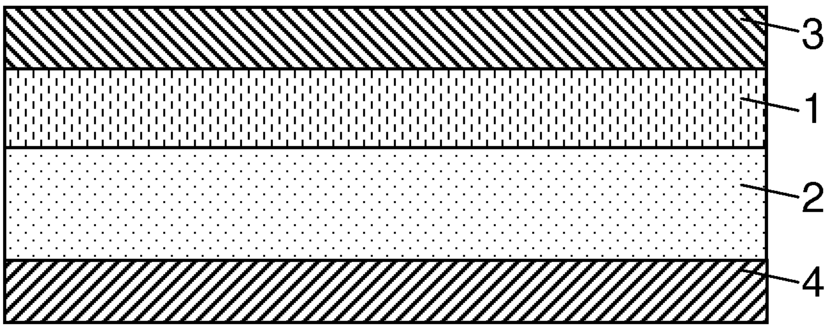


Fig. 1

EP 2 042 579 A1

## Beschreibung

Die Erfindung liegt auf dem Gebiet der angewandten Polymertechnik und betrifft ein ausschließlich einseitig verklebbares Flächenelement umfassend eine flächenförmige erste Funktionsschicht, eine flächenförmige zweite Funktionsschicht und eine flächenförmige Klebeschichtung, wobei die eine der beiden Funktionsschichten als Träger und die andere der beiden Funktionsschichten als Anpassungsmittel ausgebildet ist, die zweite Funktionsschicht parallel zu ihrer Hauptausdehnung eine erste und eine zweite Seitenfläche aufweist, die erste Funktionsschicht an der ersten Seitenfläche der zweiten Funktionsschicht angeordnet ist, und die Klebeschichtung an der zweiten Seitenfläche der zweiten Funktionsschicht angeordnet ist und zu einem dauerhaften Verbinden des Flächenelements mit einem bei Bruch mittels des Flächenelements zusammenzuhaltenden spröden Flächenkörper angepasst ist. Ferner betrifft die Erfindung einen Klebeverbund aus einem derartigen Flächenelement und einem Durchsichtelement sowie ein Anzeigesystem mit einem solchen Klebeverbund und einer Anzeigeeinrichtung. Schließlich betrifft die Erfindung die Verwendung eines Flächenelements als Splittersicherungseinrichtung für einen spröden Flächenkörper, die bei Bruch des Flächenkörpers den Flächenkörper zumindest im wesentlichen zusammen hält und so einer Vereinzelung von Bruchstücken des Flächenkörpers entgegenwirkt, sowie die Verwendung eines Klebeverbunds als Beschädigungsschutzvorrichtung für eine Anzeigeeinrichtung in einem Anzeigesystem, die einer Beschädigung der Anzeigeeinrichtung bei äußerer mechanischer Einwirkung entgegenwirkt.

Nahezu alle Geräte der modernen Unterhaltungselektronik weisen visuelle Anzeigesysteme zur Anzeige des Betriebszustands des Geräts oder weiterer Informationen auf. Sind dabei komplexere Zusammenhänge darzustellen, so werden zur Anzeige häufig Anzeigemodule auf der Grundlage von Flüssigkristallen (LCD) oder von organischen Leuchtdioden (OLED) eingesetzt. Solche Anzeigen kommen etwa bei Digitalkameras, tragbaren Kleinstcomputern und Mobiltelefonen zum Einsatz.

Zum Schutz der Anzeigemodule vor einer etwaigen Beschädigung durch äußere mechanische Einwirkung wie zum Beispiel Stößen weisen derartige Anzeigesysteme üblicherweise transparente Schutzfenster auf, die die Außenseite der Anzeigemodule bedecken und so die Gefahr einer direkten Einwirkung auf das Modul vermindern. Ein derartiger Schutz ist ebenfalls bei nichtelektronischen visuellen Anzeigesystemen erforderlich, etwa bei mechanischen Anzeigen wie beispielsweise Uhren oder Füllstandsanzeigen an Vorratsgefäßen.

Als Schutzfenster werden üblicherweise Polymerscheiben oder Glasscheiben eingesetzt, wobei jedes der beiden Systeme Vor- und Nachteile aufweist und daher entsprechend der konkreten Anwendung auszuwählen ist.

So sind Polymerscheiben zwar kostengünstig sowie leicht zu verarbeiten und bieten einen effizienten Schutz gegenüber mechanischen Einwirkungen, haben aber den Nachteil, dass sie üblicherweise nicht kratzfest sind und daher leicht beschädigt werden. Dies führt bereits nach kurzer Zeit nicht nur zu einer Verschlechterung des ästhetischen Eindrucks der Anzeigesysteme, sondern hat darüber hinaus auch eine verminderte Sicht auf den Anzeigebereich der Anzeigemodule zur Folge. Zudem sind viele gängige Polymere nur eingeschränkt gegenüber ultraviolettem Licht (UV-Licht) oder organischen Lösemitteln beständig.

Auf der anderen Seite sind Schutzfenster aus Glas inert gegenüber organischen Lösemitteln und infolge der großen Härte auch kratzbeständig, wodurch sie einen hochwertigen Eindruck vermitteln. Aufgrund der aus der Härte resultierenden Sprödigkeit dieses Materials ist Glas jedoch nur eingeschränkt als Schutz gegenüber mechanischen Einwirkungen wie Stoß oder Schlag geeignet, da es bereits bei schwachen Beanspruchungen zu einem splitternden Sprödbruch der Glasscheibe kommen kann. Neben der nur eingeschränkten Schutzwirkung ergibt sich demnach die Gefahr von Verletzungen durch die dabei entstehenden Splitter sowie die Gefahr einer Beschädigung des Anzeigemoduls durch scharfkantige Bruchstücke.

Um die Auswirkungen eines derartigen Bruchs von Glas zu vermindern wird bei vielen Systemen ein Verbundglas eingesetzt, das aus übereinander angeordneten und miteinander vollflächig verklebten einzelnen Glasscheiben besteht. Zur Strukturverstärkung weisen Verbundgläser darüber hinaus zwischen den Glasscheiben in der Verklebung häufig Folien aus Polymeren wie etwa Polyvinylbutyral auf. Es wird also insgesamt ein (mindestens) dreilagiges Verbundsystem gebildet wird. Zwar kann es auch bei einem derartigem Glasverbund grundsätzlich zu einem Bruch der einzelnen Glasscheiben kommen, jedoch wird aufgrund der Verklebung der Glasscheiben untereinander (sowie gegebenenfalls der Zwischenfolien) die Gefahr eines Ablösens der Bruchstücke aus dem Verbund verringert und somit einer Splitterbildung entgegengewirkt.

Für mobile Anwendungen ist ein derartiges Verbundglas jedoch aufgrund seines hohen Gewichts sowie der teureren Fertigung nachteilig. Daher wird als Schutzfenster häufig ein Verbund aus jeweils einer einzigen Glasscheibe mit einer Klebefoliefolie eingesetzt. Die Klebefolie besteht dabei aus einem stabilen Träger aus einer Polymerfolie, die einseitig eine Klebemasse aufweist, über die der Träger mit der Glasscheibe verbunden wird. Das so erhaltene Verbund-Schutzfenster besitzt demnach eine kratzfeste Seite mit einer Oberfläche aus Glas und eine Seite mit der Polymerfolie als Oberfläche.

Beim Einbau in das Anzeigesystem wird das Verbund-Schutzfenster mit der kratzfesten Glasseite nach außen im System befestigt, so dass die Seite mit der leichter beschädigbaren Polymerfolie nach innen und somit zum Anzeigemodul hin gerichtet ist. Durch diese Anordnung des asymmetrisch aufgebauten Verbunds ist es möglich, beim häufigen Gebrauch des Gerätes mit dem Anzeigesystem ein Verkratzen der Oberfläche des Schutzfensters zu vermeiden.

Ein derartiges Verbund-Schutzfenster ist jedoch nicht vollständig transparent, sondern weist üblicherweise Störungen auf, die die Intensität des durch das Schutzfenster hindurch tretenden Lichtes verringern. Selbst bei Verwendung von Materialien mit keiner Absorption im sichtbaren Bereich des Lichtspektrums kommt es zu Reflexionen an der Oberfläche des Schutzfensters, die eine Verringerung der Transmission zur Folge haben. Insbesondere bei Anzeigen mit geringem Kontrast stellt dies ein Problem dar, da der Betrachter die auf dem Anzeigefeld wiedergegebene Information dann aufgrund der geringen Lichtintensität nicht hinreichend erkennen kann. Dies ist etwa bei allen Anzeigesystemen der Fall, die in nicht hinreichend abgedunkelten Umgebungen zum Einsatz kommen - beispielsweise tragbare Kleincomputer im Freien unter Sonneneinstrahlung - sowie bei Anzeigesystemen, die technisch bedingt über einen nur geringen Kontrast verfügen, beispielsweise Flüssigkristallanzeigen mit niedrigem Energieverbrauch, die keine selbstleuchtenden Elemente als Hintergrundbeleuchtung (Backlight) aufweisen, sondern ausschließlich das von außen eingestrahlte Umgebungslicht reflektieren.

Eine Aufgabe der vorliegenden Erfindung ist es daher, ein ausschließlich einseitig verklebbares Flächenelement zur Verfügung zu stellen, das diese Nachteile beseitigt, das insbesondere als kostengünstige hochtransparente Funktionsfolie bei der Herstellung von transparenten Verbund-Schutzfenstern variabler Form zum Einsatz kommen kann und dadurch eine einfache Herstellung von Anzeigesystemen mit transparentem Sichtweg ermöglicht.

Diese Aufgabe wird erfindungsgemäß durch ein Gerät der eingangs genannten Art gelöst, bei dem die erste Funktionsschicht einen Brechungsindex $n_d$(20 °C) aus einem Bereich von 1,20 bis 1,40 aufweist, bevorzugt aus einem Bereich von 1,23 bis 1,37, die zweite Funktionsschicht einen Brechungsindex $n_d$(20 °C) aus einem Bereich von 1,48 bis 1,60 aufweist, besonders bevorzugt aus einem Bereich von 1,53 bis 1,59, und die Klebeschichtung einen Brechungsindex $n_d$(20 °C) aus einem Bereich von mindestens 1,43 bis 1,60 aufweist, bevorzugt aus einem Bereich von 1,47 bis 1,58, besonders bevorzugt aus einem Bereich von 1,47 bis 1,50.

Zur Erfindung trägt dabei in besonderem Maße die konkrete räumliche Abfolge der einzelnen Schichten unter Berücksichtigung der jeweils mittels dieser Schicht zu erzielenden Funktionalität bei. Die erfinderische Wirkung beruht dabei insbesondere auf der relativen Anordnung der hinsichtlich ihrer Brechungsindices spezifizierten Materialien.

Generell ist zur Verbesserung der Transparenz eines Körpers der Anteil des hindurch gelassenen Lichtes zu erhöhen und das Auftreten etwaiger Konkurrenzprozesse zu minimieren. Transparente Körper weisen eine hohe Transmission auf, die um ein Weniges kleiner ist als 1 (entsprechend einer Transmission von 100 % des eingestrahlten Lichts). Für Licht einer bestimmten Wellenlänge $\lambda$ lässt sich aus dem Energieerhaltungssatz ableiten, dass in Abwesenheit von lichtgenerierenden Prozessen die Intensität des durch einen Körper hindurch tretenden Lichts der Intensität des eingestrahlten Lichts entspricht, abzüglich der Intensität des vom Körper absorbierten Lichts und der Intensität des an den Grenzflächen des Körpers reflektierten Lichts. Somit gelten demnach für optische Bauteile, die für eine Transmission ausgelegt sind, Absorption und Reflexion des Lichtes als Konkurrenzprozesse, deren Auftreten verringert werden muss.

Wie Messungen mit einem UV-Vis Spektralphotometer zeigen, weisen beispielsweise Gläser und Polymere auf Acrylatcopolymer- und Acrylatblockcopolymerbasis im Regelfall eine nur geringe Absorption im sichtbaren Bereich des Lichts (im Wellenlängenbereich zwischen 400 nm und 700 nm) auf. Bei der Optimierung derartiger Systeme ist daher in erster Linie dem Anteil der Reflexion Rechnung zu tragen.

Reflexion tritt an der Grenzfläche zwischen zwei miteinander in Kontakt stehenden Phasen 1 und 2 auf. Das Ausmaß der Reflexion hängt dabei von den Brechungsindices $n_{d,1}$ und $n_{d,2}$ der beiden Materialien ab.

Als Brechungsindex $n_d$ wird im Rahmen dieser Arbeit die nach dem Brechungsgesetz von Snellius definierte Größe (Brechzahl) verstanden. Der Wert des Brechungsindex hängt insgesamt von der Wellenlänge des eingestrahlten Lichts und von der Messtemperatur ab. Sofern nicht anders angegeben, wird vorliegend der Brechungsindex $n_d$ als derjenige Wert interpretiert, der bei einer Messtemperatur von 20 °C mit Licht einer Wellenlänge von 550 nm ($\pm$150 nm) gemessen wird.

Aus den Brechungsindices $n_{d,1}$ und $n_{d,2}$ der an der Grenzfläche miteinander in Kontakt stehenden zwei Materialien berechnet sich die Reflexion $\rho(\lambda)$ gemäß der Fresnel-Gleichung nach

$$\rho(\lambda) = \left( \frac{n_{d,2} - n_{d,1}}{n_{d,2} + n_{d,1}} \right)^2 \quad .$$

Für den Fall von Materialien mit gleichem Brechungsindex (isorefraktive Materialien, also für $n_{d,1} = n_{d,2}$) nimmt der Zähler in obiger Gleichung einen Wert von Null an. Somit kommt es an dieser Grenzfläche zu keiner Reflexion. Ein derartiger Wert lässt sich in der Praxis jedoch selten erreichen, da die miteinander in Kontakt stehenden Materialien in der Regel unterschiedliche Brechungsindices aufweisen und sich der Brechungsindex des Systems somit an der Phasengrenze sprunghaft ändert.

Um die an der Grenzfläche auftretende Reflexion zu verringern, kann daher ein zusätzliches Material an der Grenzfläche vorgesehen sein, dessen Brechungsindex zwischen dem Brechungsindex der einen Phase und dem Brechungsindex der anderen Phase liegt, so dass anstelle einer großen Änderung an der ursprünglichen Grenzfläche zwei kleinere Änderungen an den zwei sich durch Einbringen des Materials ergebenden Zwischengrenzflächen auftreten. Das zusätzliche Material dient dabei als Anpassungsmittel hinsichtlich der Brechungsindices der beiden Phasen und erfüllt somit die Funktion eines Antireflexionsmittels.

Bei einer besonders großen Änderung des Brechungsindex an der Grenzfläche oder zum Erzielen besonders geringer Reflexionsverluste kann das Antireflexionsmittel auch mehrlagig aufgebaut sein, so dass es aus mehreren Einzellagen besteht und bei genauer Abstimmung der Materialien die Änderungen der Brechungsindices an den Zwischengrenzflächen jeweils besonders klein ausfallen können.

Besteht beispielsweise die eine Phase der Grenzfläche aus Luft mit einem Brechungsindex $n_d$ von 1,00 und die andere Phase aus Glas mit einem Brechungsindex $n_d$ aus einem Bereich von etwa 1,45 bis 1,65 von (je nach Zusammensetzung, zum Beispiel für Quarzglas ($n_d$: 1,458), Bor-Kronglas ($n_d$: 1,518), Bor-Kronglas BK7 ($n_d$: 1,514), Flintglas ($n_d$: 1,620); Werte jeweils für Licht einer Wellenlänge von 588 nm; nach Pedrotti, Pedrotti, Bausch, Schmidt, Optik, 1996, Prentice Hall, München), so kann zum Beispiel als Antireflexionsmittel mit einem Brechungsindex $n_d$ von 1,20 eingesetzt werden.

Sollen Reflexionsverluste an der Grenzfläche zweier Phasen durch Verwendung mehrlagiger Systeme minimiert werden, so ist es demnach zwingend erforderlich, dass beim Übergang von der einen Phase über das mehrlagige System zu der anderen Phase die räumliche Abfolge der Einzellagen so gewählt wird, dass ein kontinuierlicher Anstieg (oder Abfall) der Brechungsindices eintritt.

Es wurde nun jedoch herausgefunden, dass abweichend von einer solchen kontinuierlich ansteigenden Anordnung der Brechungsindices besonders transparente Verbundsysteme dann erhalten werden, wenn auf einer als Durchsichtelement verwendeten Glasplatte ein derartiges erfindungsgemäßes Flächenelement aufgeklebt wurde, für das der Brechungsindex der zweiten Funktionsschicht höher als der Brechungsindex der Klebeschichtung und deutlich höher als der Brechungsindex der ersten Funktionsschicht gewählt wurde.

Wies also das erfindungsgemäße Flächenelement eine Schichtabfolge auf, in der der Brechungsindex der Klebeschichtung niedriger ausfiel als bei einer Abfolge mit von der ersten Funktionsschicht über die zweite Funktionsschicht bis zur Klebeschichtung kontinuierlich ansteigenden Brechungsindices, so wies der damit erhaltene Flächenverbund eine besonders hohe Transmission auf. Die Erfinder führen diese Verbesserung der Transmission auf eine qualitativ hochwertige und somit bessere Klebeverbindung zwischen dem Glassubstrat und der Klebeschichtung zurück, die sich bevorzugt bei Verwendung von Klebemassen erreichen lässt, die niedrigere Brechungsindices als eigentlich erforderlich aufweisen. Infolge der besseren Klebeverbindung kommt es vermutlich zur Ausbildung einer homogeneren Verklebungsfläche als bei herkömmlichen Systemen, so dass nach einer Verklebung die Flächenkonzentration an Streuzentren geringer ausfällt.

Günstig ist es dabei zudem, wenn das Flächenelement vollflächig für sichtbares Licht höchsttransparent ausgebildet ist, wobei es für Licht einer Wellenlänge von 550 nm eine Transmission von mehr als 86 % aufweist, insbesondere von mehr als 88 % und besonders bevorzugt von mehr als 92 %. Infolge einer solchen höchsttransparenten Ausbildung wird die Verwendung des erfindungsgemäßen Flächenelements insbesondere auch für besonders kontrastarme Anzeigesysteme möglich.

In einem erfindungsgemäßen Flächenelement kann etwa die erste Funktionsschicht als Träger ausgebildet sein und demnach die zweite Funktionsschicht als Anpassungsmittel. Auf diese Weise liegt der Träger an keiner Seitenfläche des Flächenelements frei, so dass insbesondere bei Verwendung von mechanisch belastbaren Anpassungsmitteln ein Flächenelement bereit gestellt wird, das vor einer Beschädigung infolge äußerer mechanischer Einwirkung geschützt ist, etwa vor einem Verkratzen während der Fertigung. Ebenso kann die erste Funktionsschicht aber auch als Anpassungsmittel ausgebildet sein und die zweite Funktionsschicht als Träger. Auf diese Weise können auch geeignete Trägermaterialien mit einem niedrigen Brechungsindex in dem erfindungsgemäßen Flächenelement zum Einsatz kommen.

Günstig ist es, wenn dabei das Anpassungsmittel ein Antireflexionsmittel ist, das zum Vermindern des Anteils des an der Außenseite des Flächenelements reflektierten sichtbaren Lichts eingerichtet ist. Auf diese Weise ist es möglich, den Anteil des transmittierten Lichtes zu erhöhen und damit die Transparenz des Flächenelements zu verbessern. Besonders vorteilhaft ist es, wenn dabei das Antireflexionsmittel einen mehrlagigen Aufbau aufweist. Mittels eines derartigen mehrlagigen Aufbaus ist es möglich, eine gezielte und fein abgestimmte Anpassung der Brechungsindices durchzuführen und dadurch die Reflexionsverluste besonders klein zu halten. Stattdessen kann das Antireflexionsmittel aber auch einen einlagigen Aufbau aufweisen, also lediglich aus einer einzigen Lage bestehen, so dass es möglich ist, ein Antireflexionsmittel mit einem homogenen Zusammenhalt einzusetzen und so dessen mechanische Belastbarkeit zu erhöhen. Dabei ist es insbesondere günstig, wenn das Antireflexionsmittel eine Antireflexionsbeschichtung mit einer Schichtdicke von mindestens 0,2 nm und höchstens 500 nm ist, bevorzugt mit einer Schichtdicke von mindestens 1,0

nm und höchstens 50 nm ist. Auf diese Weise kann das Antireflexionsmittel besonders kompakt gestaltet werden und gleichzeitig hohe mechanische Flexibilität aufweisen.

Ferner ist es von Vorteil, wenn zumindest die erste Funktionsschicht stabil gegenüber mechanischer Beanspruchung ausgebildet ist. Dies beinhaltet zum Beispiel eine hohe Festigkeit wie etwa Reißfestigkeit, eine hohe Risszähigkeit, eine geringe Ritzbarkeit, eine geringe Spaltbarkeit oder dergleichen. Infolge dieser Ausbildung der nach außen gerichteten Seitenfläche des Flächenelements wird eine Beschädigung des Flächenelements insbesondere während der Fertigung des Anzeigesystems verhindert und damit eine hohe Transparenz gewährleistet.

Vorteilhaft ist es, wenn die Klebeschichtung eine Haftklebemasse umfasst. Hierdurch wird ein einfaches Verkleben des Flächenelements auf dem spröden Flächenkörper möglich.

Schließlich ist es günstig, wenn das Flächenelement einen temporären Träger umfasst, der an der Klebeschichtung angeordnet und mit der Klebeschichtung rückstandsfrei ablösbar verbunden ist. Diese Ausbildung ermöglicht eine besonders einfache Handhabung des erfindungsgemäßen Flächenelements vor dem Verkleben auf einem Durchsichtelement. Insbesondere durch diese Ausbildung ist es möglich, staub- und blasenfreie Verklebungen zu erhalten und somit auch einen Klebeverbund mit hervorragender Transparenz.

Gemäß einem weiteren Aspekt der vorliegenden Erfindung wird die Verwendung eines der zuvor genannten Flächenelemente als Splittersicherungseinrichtung für einen spröden Flächenkörper, die bei Bruch des Flächenkörpers den Flächenkörper zumindest im wesentlichen zusammen hält und so einer Vereinzelung von Bruchstücken des Flächenkörpers entgegenwirkt, sowie ein aus einem der vorgenannten Flächenelemente und einem Durchsichtelement erhaltener Klebeverbund vorgeschlagen, in dem das Durchsichtelement mit dem Flächenelement über die Klebeschichtung des Flächenelements dauerhaft verbunden ist.

Besonders günstig ist es dabei, wenn das Durchsichtelement zumindest einen Teilbereich aus Glas aufweist, der als spröder Flächenkörper für das Verbinden mit dem Flächenelement angepasst ist. Aufgrund der hohen optischen Güte und Transparenz dieses Werkstoffes sowie der hohen Kratzfestigkeit wird bei der Verwendung von Glas ein besonders stabiler und zugleich transparenter Klebeverbund erhalten.

Ferner bietet die Erfindung gemäß einem weiteren Aspekt die Verwendung dieses Klebeverbunds als Beschädigungsschutzvorrichtung für eine Anzeigeeinrichtung. Die Beschädigungsschutzvorrichtung wirkt einer Beschädigung der Anzeigeeinrichtung bei äußerer mechanischer Einwirkung entgegen. Dadurch wird ein Anzeigesystem mit diesem Klebeverbund und einer Anzeigeeinrichtung zur Verfügung gestellt, in dem der Klebeverbund derart angeordnet ist, dass die Seite des Klebeverbunds, an der das Flächenelement angeordnet ist, zu der Seite der Anzeigeeinrichtung hin gewandt ist, die zur Anzeige der anzuzeigenden Informationen angepasst ist. Infolge dieser Anordnung wird ein im optischen Anzeigebereich an seiner Außenseite kratzfestes Anzeigesystem erhalten.

Günstig ist es dabei, wenn das Flächenelement und die zur Anzeige von Informationen angepasste Seite der Anzeigeeinrichtung derart zueinander beabstandet angeordnet sind, dass der mittlere Abstand mindestens 40 $\mu$m und höchstens 510 $\mu$m beträgt, bevorzugt mindestens 50 $\mu$m und höchstens 400 $\mu$m. Hierdurch wird eine wirksame mechanische Entkopplung der Oberflächen beider Komponenten bei gleichzeitig hoher Transparenz erhalten, so dass der Verbund mit dem Flächenelement auch bei einer Deformation - etwa infolge eines auf das Durchsichtelement ausgeübten mechanischen Drucks - nicht mit der Anzeigeeinrichtung in Kontakt tritt und so eine Beschädigung der Anzeigeeinrichtung auch bei starker äußerer Einwirkung vermieden werden kann.

Als Flächenelemente werden erfindungsgemäß alle üblichen flächenförmigen Gebilde angesehen, die eine Verklebung ermöglichen. Diese können verschieden ausgestaltet sein, insbesondere flexibel, beispielsweise als Band, Etikett oder Folie. Infolge der flächenförmigen Ausgestaltung erstrecken sich Flächenelemente somit entlang ihrer Länge und Breite (Hauptausdehnung) jeweils über einen Bereich, der größer als die Ausdehnung des Flächenelements in einer Richtung senkrecht zu diesen zwei Richtungen ist (Höhe; Nebenausdehnung), wobei die Flächenausdehnung in einer Ebene oder - etwa auf einem gekrümmten Substrat - auch in einer unebenen Anordnung liegen kann. Bei verklebbaren Flächenelementen handelt es sich um Flächenelemente, die verklebt werden und dann eine mechanisch belastbare Verbindung mit dem Klebegrund (Haftgrund; Untergrund; Substrat) bieten. Zu diesem Zweck sind die verklebbaren Flächenelemente einseitig mit Klebemassen ausgerüstet, die ebenfalls flächenförmig in Form einer Klebeschichtung angeordnet ist.

Derartige Flächenelemente sind vorliegend für sichtbares Licht hochtransparent und können sogar höchsttransparent ausgebildet sein, so dass sie bevorzugt eine Transmission von mehr als 86 % für Licht einer Wellenlänge von 550 nm aufweisen, insbesondere von mehr als 88 % und besonders bevorzugt von mehr als 92 %. Eine derartige Transparenz wird durch die Auswahl geeigneter Materialien als Komponenten des Flächenelements erzielt, wobei eine diesbezügliche Auswahl etwa hinsichtlich einer geringen Absorption der Materialien im gewünschten Wellenlängenbereich sowie dem jeweiligen Brechungsindex zu treffen ist. Beispiele für derartige Systeme sind nachfolgend beschrieben.

Das Flächenelement weist eine erste Funktionsschicht und eine zweite Funktionsschicht auf. Als Funktionsschichten werden vorliegend alle flächenförmig angeordneten Strukturen bezeichnet, die innerhalb des Gesamtsystems vorrangig dazu vorgesehen sind, eine funktional einheitliche Wirkung zu erzielen, die daher auch der näheren Beschreibung der Funktionsschicht dienen kann. Die einheitliche Wirkung kann innerhalb einer solchen Funktionsschicht jedoch

über auch einzelne Teilprozesse erreicht werden können, etwa in einer mehrlagig aufgebauten Funktionsschicht, also einer Funktionsschicht, die ihrerseits aus mindestens zwei Einzellagen aufgebaut ist, die hinsichtlich ihres chemischen, strukturellen und/oder geometrischen Aufbaus unterschiedlich sind.

Vorliegend weist die zweite Funktionsschicht parallel zu ihrer Hauptausdehnung eine erste und eine zweite Seitenfläche auf, wobei an der ersten Seitenfläche die erste Funktionsschicht und an der zweiten Seitenfläche die Klebeschichtung angeordnet ist, so dass die zweite Funktionsschicht sich zwischen der ersten Funktionsschicht und der Klebeschichtung befindet.

Erfindungsgemäß ist eine der beiden Funktionsschichten als Träger ausgebildet und die andere der beiden Funktionsschichten als Anpassungsmittel. Dieser Träger ist flächenförmig mit einer zweidimensionalen Hauptausdehnung ausgebildet. Parallel zu seiner Hauptausdehnung begrenzen den Träger zwei Seitenflächen, eine erste Seitenfläche und eine zweite Seitenfläche.

Der Träger kann aus allen geeigneten flächenförmig ausgebreiteten Materialien hergestellt werden, sofern diese im Wellenlängenbereich des sichtbaren Lichtes eine hohe Transmission aufweisen. So ist es von Vorteil, wenn die Transmission für Licht einer Wellenlänge von 550 nm mehr als 86 % beträgt, besonders bevorzugt sogar mehr als 88 %. Zudem ist es günstig, wenn die Trübung weniger als 1 % beträgt (bestimmt als Haze-Wert nach ASTM D 1003).

Abgesehen von der Auswahl des Trägermaterials entsprechend seiner optischen Eigenschaften sollte der Träger eine hinreichende Festigkeit aufweisen, um einen Schutz gegenüber splitterartigen Bruchstücken des Haftgrundes gewährleisten zu können. Hierfür ist es vorteilhaft, wenn der Träger einer Zugbeanspruchung von mehr als 50 MPa standhält (bestimmt nach ASTM D882), bevorzugt sogar 150 MPa, was beispielsweise durch Verwendung von Polyethylenterephthalat als Träger erhalten werden kann.

So lassen sich als zweite Funktionsschicht für einen Träger etwa hochtransparente Folien einsetzen, die gleichzeitig einen Brechungsindex $n_d$ von 1,52, einen Haze-Wert von weniger als 3 % nach ASTM D1003 (oder - noch vorteilhafter - von weniger als 2 %) und eine Transmission von mehr als 86 % für Licht einer Wellenlänge von 550 nm nach ASTM D1003 aufweisen.

Im folgenden sind zunächst einige Trägermaterialien für Träger beschrieben, die die zweite Funktionsschicht darstellen. Hierfür geeignet sind hochtransparente Folien, beispielsweise solche aus Polyethylenterephthalat (PET). So haben sich zum Beispiel einige der Folien als günstig herausgestellt, die unter der Bezeichnung Hostaphan™ von der Firma Mitsubishi oder unter der Bezeichnung Lumirror™ von der Firma Toray vertrieben werden, wobei insbesondere die hochtransparenten Formen Lumirror™ T60 für eine erfindungsgemäße Anwendung geeignet sind (Brechungsindices $n_d$ von etwa 1,48). Ein weiterer geeigneter Polyester ist beispielsweise Polybutylenterephthalat.

Neben Polyesterfolien lassen sich auch andere hochtransparente Folien einsetzen, etwa solche auf der Basis von Polyvinylchlorid (PVC), Polycarbonat (PC; Brechungsindex $n_d$ von etwa 1,60), Polyvinylalkohol, Polyvinylbutyral, Polyamid einschließlich Copolyamid, Polyimid, Polyurethan (PU), Polymethylmethacrylat (PMMA; Brechungsindex $n_d$ von etwa 1,49) oder Polystyrol (PS) sowie hiervon abgeleitete Materialien. Erfindungsgemäß können beispielsweise außer Folien aus reinem Polystyrol auch Folienmaterialien verwendet werden, die neben Styrol andere Comonomere enthalten, etwa Butadien, um die Kristallisationsneigung der Folie zu verringern und damit die Transmission zu erhöhen.

Weitere geeignete Materialien sind solche aus den Gruppen der Polyethersulfone und Polysulfone; diese werden beispielsweise von der Firma BASF unter den Bezeichnungen Ultrason™ E und Ultrason™ S vertrieben.

Überdies können auch hochtransparente thermoplastische Elastomere auf Urethanbasis (TPU) zum Einsatz kommen, wie sie etwa von der Firma Elastogran GmbH kommerziell erhältlich sind.

Die Trägermaterialien für Träger, die die erste Funktionsschicht darstellen, sind ebenfalls entsprechend ihrem Brechungsindex spezifiziert. So sind als Träger hochtransparente Polyolefine geeignet, beispielsweise Polypropylen (PP), wobei es besonders günstig ist, wenn derartige Folien keine kristallinen Bereiche aufweisen, die die Transparenz verringern können. Dazu kann der Träger etwa nicht orientiert (als "gecastetes" Polypropylen) oder als orientiertes Material vorliegen, beispielsweise monoorientiert (MOPP) oder biaxial gereckt (BOPP). Ein anderes als Träger geeignetes Polyolefin ist zum Beispiel funktionalisiertes Polyethylen (PE). So lassen sich neben Ethylen auch Cyclohexen oder Norbonenderivate als Comonomere einsetzen, die eine Kristallisation verringern, oder auch andere olefinische Comonomere, die zusätzlich zum Ethylen eingesetzt werden und durch ihre sterische Anordnung das Auftreten von kristallinen Domänen verringern.

Ebenfalls als erste Funktionsschicht geeignet ist Triacetylcellulose (TAC) sowie weitere Cellulosederivate, zum Beispiel Cellulosebutyrat, Cellulosepropionat und Ethylcellulose, die jeweils als Homopolymere oder als Comonomere sowie ebenfalls in Mischungen eingesetzt werden können.

Um die Eigenschaften solcher Folien in der ersten oder zweiten Funktionsschicht gezielt anpassen zu können, können diese natürlich auch weitere Bestandteile enthalten, beispielsweise Weichmacher zur Flexibilitätssteigerung. Des Weiteren kann die Oberfläche des Trägers behandelt sein, indem auf diese etwa eine dünne Beschichtung aufgedampft ist, beispielsweise ein Haftvermittler aufgetragen ist.

Neben einschichtigen Folien lassen sich auch mehrschichtige Folien einsetzen, die etwa über eine Coextrusion hergestellt werden können. Hierfür ist es möglich, die vorgenannten Polymermaterialien miteinander zu kombinieren.

Um einerseits eine hinreichende mechanische Stabilität als Splitterschutz zu bieten, andererseits aber auch eine hohe Transmission sowie leichte Verarbeitbarkeit sicherzustellen, werden als Träger eines erfindungsgemäßen Flächenelements normalerweise Folienmaterialien mit einer Stärke aus einem Bereich zwischen 4 und 150 μm eingesetzt, bevorzugt aus einem Bereich von 12 bis 100 μm oder sogar aus einem Bereich von 23 bis 75 μm.

Weiterhin kann es vorteilhaft sein, wenn der Träger formstabil schneidbar oder stanzbar ist und zudem eine hinreichende thermische Beständigkeit aufweist, um auch einer Verarbeitung bei höheren Temperaturen standzuhalten, etwa beim Auftragen einer heißschmelzbaren Klebemasse aus der Schmelze.

An der ersten Seitenfläche des zweiten Funktionsabschnitts ist eine Klebeschichtung angeordnet. Als Klebeschichtung wird eine zumindest im **Wesentlichen** flächenförmig ausgebreitete Klebemasse bezeichnet, die somit ebenfalls über eine Hauptausdehnung und eine Nebenausdehnung verfügt. Die Klebemasse ist zu einem dauerhaften Verbinden des Flächenelements mit einem spröden Flächenkörper angepasst, der bei Bruch mittels des Flächenelements zusammenzuhalten ist.

Als Flächenkörper wird vorliegend jeder einen Haftgrund für das Flächenelement bildende Körper verstanden, der zumindest einen flächigen Teilbereich aufweist, dessen Ausdehnung in etwa der Hauptausdehnung des Flächenelements entspricht, unabhängig von der konkreten Beschaffenheit dieses Körpers hinsichtlich seiner weiteren Abmessungen. Dieser Flächenkörper ist zudem spröde, er weist also eine hohe Sprödigkeit und somit auch Härte auf, so dass er sich unter Einwirkung einer äußeren Kraft kaum plastisch verformen lässt, sondern vielmehr bricht. Typische Beispiele für derartige spröde Flächenkörper sind etwa Gläser auf silikatischer Basis, die unterschiedliche Zusammensetzungen haben können, etwa Quarzglas, Boratglas, Laborglas, Fensterglas, Floatglas, Bleikristallglas, Kronglas, Kalk-Natron-Glas und dergleichen. Sollte es zu einem Bruch des spröden Flächenkörpers kommen, so dient das einseitig an der Oberseite des Flächenkörpers verklebte Flächenelement als Splitterschutz, indem es die Bruchstücke des Flächenkörpers einschließlich etwaiger Splitter infolge der Klebekraft der Klebemasse zusammen hält.

Erfindungsgemäß ist die Klebeschichtung zudem für eine hohe Klebkraft auf dem spröden Flächenkörper angepasst, beispielsweise von mehr als 3,5 N/cm oder sogar von mehr als 4,0 N/cm. Eine derartige Anpassung wird etwa durch eine gezielte Abstimmung der Klebemasse der Klebeschichtung in Hinblick auf den jeweiligen Haftgrund erhalten, wobei eine derartige Abstimmung neben der Auswahl einer oder mehrerer Polymere als Klebemassen zum Beispiel auch eine gezielte Additivierung der Klebemasse umfassen kann.

Für erfindungsgemäß einsetzbare Klebemassen ist zusätzlich zu einer Anpassung der Klebkraft ist auch der Brechungsindex der Klebemasse von Bedeutung. So soll die Klebemasse der Klebeschichtung einen Brechungsindex $n_d$(20 °C) aus einem Bereich von 1,43 bis 1,60 aufweisen, bevorzugt aus einem Bereich von 1,47 bis 1,58, besonders bevorzugt aus einem Bereich von 1,47 bis 1,50.

Hierdurch ist es möglich ein besonders transparentes System zu erhalten. Maßnahmen zu einer derartigen Anpassung können alle geeigneten speziellen Maßnahmen darstellen, etwa die Wahl eines Polymersystems mit einem geeigneten Brechungsindex als Klebemasse oder die Zugabe eines geeigneten Additivs zur Klebemasse. Beispiele für geeignete Polymersysteme finden sich nachstehend.

Grundsätzlich ist es demnach möglich, beliebige Klebemassen einzusetzen, sofern diese die zur Erzielung der erfinderischen Wirkung erforderlichen Eigenschaften aufweisen, etwa hinsichtlich ihres Absorptionsverhaltens und Brechungsindex sowie hinsichtlich der Klebkraft auf dem jeweiligen Substrat. So sind beispielsweise sowohl Haftklebemassen als auch Hitze-aktivierbare Klebemasse grundsätzlich gut geeignet, obgleich aus Gründen der höheren Transparenz ersteren der Vorzug zu geben ist. Im Folgenden sind rein exemplarisch einige typische Klebemassen-Systeme beschrieben, die sich im Zusammenhang mit der vorliegenden Erfindung als besonders vorteilhaft herausgestellt haben.

Aufgrund von praktischen Erwägungen ist insbesondere die Verwendung von Haftklebemassen von Vorteil. Geeignete Haftklebemassen auf der Grundlage von Silikonsystemen sind zum Beispiel in US 4,874,671 beschrieben, mit denen sich Klebemassen mit Brechungsindices von mehr als 1,47 realisieren lassen.

Bevorzugt gelangen jedoch auch Haftklebemassen auf Acrylatbasis zum Einsatz. Derartige Klebemassen sind aus acrylatartigen Monomeren aufgebaut. Die Gruppe der acrylatartigen Monomere besteht aus sämtlichen Verbindungen mit einer Struktur, die sich von der Struktur von unsubstituierter oder substituierter Acrylsäure oder Methacrylsäure oder aber aus Estern dieser Verbindungen herleiten lässt (diese Optionen werden mit dem Begriff "(Meth)Acrylate" zusammenfassend benannt). Diese Monomere lassen sich durch die allgemeine Formel $CH_2$=C(R')(COOR") beschreiben, wobei der Rest R' ein Wasserstoffatom oder eine Methylgruppe sein kann und der Rest R" ein Wasserstoffatom sein kann oder aber aus der Gruppe der gesättigten, unverzweigten oder verzweigten, substituierten oder unsubstituierten $C_1$- bis $C_{30}$-Alkylgruppen gewählt ist. Zur Vermeidung optischer Beeinträchtigungen der Klebemasse aufgrund von Beimengungen in den Monomeren werden die Monomere bevorzugt vor der Verwendung aufgereinigt, etwa um Alterungsschutzmittel zu entfernen, die sich unter Lichteinfluss verfärben.

Die (Meth)Acrylat-basierenden Polymere dieser Haftklebemassen sind etwa durch radikalische Polymerisation erhältlich, wobei das Polymer häufig einen Gehalt an acrylatartigen Monomeren von 50 Gew.-% oder mehr aufweist.

Die Monomere werden dabei üblicherweise dermaßen gewählt, dass die resultierenden Polymermassen bei Raumtemperatur oder höheren Temperaturen als Haftklebemassen eingesetzt werden können, wobei diese haftklebende Eigenschaften entsprechend dem "Handbook of Pressure Sensitive Adhesive Technology" von Donatas Satas (van Nostrand, New York 1989) besitzen.

Im Hinblick auf die optischen Eigenschaften des Produktes ist es dabei von Vorteil, wenn die (Meth)Acrylathaftklebemassen Brechungsindices $n_d$ von mehr als > 1,47 aufweisen (bei 20 °C).

(Meth)Acrylathaftklebemassen lassen sich dabei bevorzugt durch Polymerisation einer Monomermischung gewinnen, die Acrylsäureester und/oder Methacrylsäureester und/oder deren freien Säuren mit der Formel $CH_2=C(R')(COOR''')$ umfasst, wobei R' = H oder $CH_3$ und R''' H oder eine Alkylkette mit 1 - 20 C-Atomen ist. Die Poly(meth)acrylate weisen hierbei üblicherweise Molekulargewichte (Molmassen) $M_W$ von mehr als 200.000 g/mol auf.

Als Monomere können etwa Acrylmomonere oder Methacrylmonomere eingesetzt werden, die Acryl- und Methacrylsäureester mit Alkylgruppen aus 4 bis 14 C-Atomen umfassen, üblicherweise aus 4 bis 9 C-Atomen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat oder deren verzweigten Isomere wie etwa Isobutylacrylat, 2-Ethylhexylacrylat, 2-Ethylhexylmethacrylat, Isooctylacrylat oder Isooctylmethacrylat.

Weitere einsetzbare Monomere sind monofunktionelle Acrylate bzw. Methacrylate von überbrückten Cycloalkylalkoholen, bestehend aus zumindest 6 C-Atomen. Die Cycloalkylalkohole können auch substituiert sein, zum Beispiel durch $C_1$- bis $C_6$-Alkylgruppen, Halogenatome oder Cyanogruppen. Spezifische Beispiele sind Cyclohexylmethacrylat, Isobornylacrylat, Isobornylmethacrylat und 3,5-Dimethyladamantylacrylat.

Ferner können Monomere eingesetzt werden, die polare Gruppen aufweisen wie beispielsweise Carboxylreste, Sulfonsäure-, Phosphonsäure-, Hydroxy-, Lactam-, Lacton-, N-substituierte Amid-, N-substituierte Amin-, Carbamat-, Epoxy-, Thiol-, Alkoxy- oder Cyanreste sowie Ethergruppen oder dergleichen.

Als moderate basische Monomere geeignet sind beispielsweise einfach oder zweifach N-alkylsubstituierte Amide, insbesondere Acrylamide. Spezifische Beispiele sind N,N-Dimethylacrylamid, N,N-Dimethylmethacrylamid, N-tert-Butylacrylamid, N-Vinylpyrrolidon, N-Vinyllactam, Dimethylaminoethylacrylat, Dimethylaminoethylmethacrylat, Diethylaminoethylacrylat, Diethylaminoethylmethacrylat, N-Methylolacrylamid, N-Methylolmethacrylamid, N-(Butoxymethyl)methacrylamid, N-(Ethoxymethyl)acrylamid, N-Isopropylacrylamid, wobei diese Aufzählung nicht abschließend ist.

Weitere Beispiele für Monomere werden aufgrund ihrer für eine Vernetzung nutzbaren funktionellen Gruppen ausgewählt, etwa Hydroxyethylacrylat, Hydroxyethylmethacrylat, Hydroxypropylacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylacrylat, 2-Butoxyethylmethacrylat, Cyanoethylacrylat, Cyanoethylmethacrylat, Glycerylmethacrylat, 6-Hydroxyhexylmethacrylat, Vinylessigsäure, Tetrahydrofurfurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.

Ferner kommen als Monomere Vinylverbindungen in Frage, insbesondere Vinylester, Vinylether, Vinylhalogenide, Vinylidenhalogenide, Vinylverbindungen mit aromatischen Cyclen und Heterocyclen in α-Stellung. Auch hier seien nicht ausschließend einige Beispiele genannt, wie Vinylacetat, Vinylformamid, Vinylpyridin, Ethylvinylether, Vinylchlorid, Vinylidenchlorid und Acrylnitril.

Im Hinblick auf die optischen Eigenschaften der Klebemasse ist es ganz besonders günstig, Copolymere einzusetzen, die Comonomere enthalten, die zumindest einen aromatischen Teilbereich aufweisen und dadurch den Brechungsindex der Klebemasse erhöhen können. Als derartige Komponenten eigenen sich aromatische Vinylverbindungen wie etwa Styrol, wobei die aromatischen Teilbereiche bevorzugt einen aromatischen Kern aus $C_4$- bis $C_{18}$-Bausteinen aufweisen und optional auch Heteroatome enthalten können. Beispiele hierfür sind etwa 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat, 4-Biphenylmethacrylat, 2-Naphthylacrylat, 2-Naphthylmethacrylat sowie Mischungen aus diesen Monomeren, wobei diese Aufzählung nicht abschließend ist.

Bei Haftklebemassen wird der Anteil an mit Aromaten substituierten Monomeren in der Klebemasse jedoch dadurch begrenzt, dass durch Verwendung derartiger Monomere die Glasübergangstemperatur des Polymers erhöht wird, was die Abnahme der Klebrigkeit dieses Polymers zur Folge hat. Da dies ein für Haftklebemassen unerwünschter Effekt ist, ist je nach dem gewählten System der Aromatenanteil infolge dieser Wechselwirkungen nicht ohne weiteres frei wählbar.

Durch die Auswahl der Comonomere und des Anteils dieser Comonomere an der Klebemasse ist es also möglich, den Brechungsindex der Klebemasse gezielt zu steuern. So kann etwa bei Erhöhung des Anteils von mit aromatischen Systemen substituierten Comonomeren der Brechungsindex der Klebemasse insgesamt erhöht werden und so eine Lichtstreuung an der Grenzfläche zwischen der Haftklebemasse und einem Glassubstrat verringert werden.

Die Comonomer-Zusammensetzung lassen sich dabei auch derart wählen, dass die Haftklebemassen als Hitze-aktivierbare Haftklebemassen einsetzbar sind, die erst unter Temperatureinwirkung und optionalem Druck haftklebrig werden und nach Verklebung und Abkühlen infolge der Verfestigung eine hohe Klebkraft zum Haftgrund aufbauen. Derartige Systeme weisen Glasübergangstemperaturen $T_G$ von 25 °C oder mehr auf.

Weitere Beispiele für Monomere können Photoinitiatoren mit einer copolymerisierbaren Doppelbindung sein, insbesondere solche, die aus der Gruppe enthaltend Norrish-I- oder Norrish-II-Photoinitiatoren, Benzoinacrylate oder acrylierte Benzophenone (unter der Bezeichnung Ebecryl P 36® von der Firma UCB im Handel) ausgewählt werden. Grundsätzlich sind hierbei alle dem Fachmann bekannten Photoinitiatoren einsetzbar, die bei Bestrahlung mit UV-Licht im Polymer über einen radikalischen Mechanismus eine Vernetzung bewirken. Einen allgemeinen Überblick über verwendbare Photoinitiatoren, die dann mit zumindest einer Doppelbindung funktionalisiert werden können, bietet Fouassier in "Photoinitiation, Photopolymerization and Photocuring: Fundamentals and Applications" (Hanser-Verlag, München 1995), sowie - ergänzend - Carroy et al. in "Chemistry and Technology of UV and EB Formulation for Coatings, Inks and Paints" (Oldring (Hrsg.), 1994, SITA, London).

Insbesondere können auch Haftklebemassen eingesetzt werden, die Acrylatblockcopolymere enthalten. Dadurch ist es möglich, zur Synthese einer Haftklebemasse mit hohem Brechungsindex eine große Anzahl unterschiedlicher Monomere verwenden zu können, so dass sich durch die konkrete Auswahl von Monomeren infolge der jeweiligen chemischen Zusammenstellung die Haftklebeeigenschaften gezielt in einem großen Umfang steuern und einstellen lassen. Zudem lassen sich so hochkohäsive Haftklebemassenschichten erhalten, ohne dass dafür zusätzliche Vernetzungsschritte erforderlich sind.

Das Acrylatblockcopolymer ist hierbei ein Acrylatblockcopolymer mit zumindest einer strukturellen Einheit, die durch die allgemeine stöchiometrische Formel P(A)-P(B)-P(A) beschrieben wird. A und B stehen hierbei für ein Monomer oder auch mehrere Monomere des Typs A bzw. für ein Monomer oder mehrere Monomere des Typs B, die zur Herstellung des jeweiligen Polymerblockes nutzbar sind. Im Sinne dieser Schrift soll der Begriff "Polymerblock" somit sowohl Homo- als auch Copolymerblöcke einschließen, soweit im Einzelfall nicht etwas anderes spezifiziert wird. P(A) steht für einen Polymerblock, der durch Polymerisation wenigstens eines Monomers des Typs A erhalten wird. P(B) steht für einen Polymerblock, der durch Polymerisation wenigstens eines Monomers des Typs B erhalten wird. Demzufolge weist das Acrylatblockcopolymer mindestens die Einheit P(A)-P(B)-P(A) aus wenigstens einem Polymerblock P(B) und wenigstens zwei Polymerblöcken P(A) auf, wobei

- die Polymerblöcke P(A) voneinander unabhängige Homopolymerblöcke oder Copolymerblöcke sind, die jeweils zu mindestens 75 Gew.-% Monomere des Typs A enthalten, wobei die (Co-)Polymerblöcke P(A) jeweils Polymerblöcke mit Erweichungstemperaturen in einem Bereich von 0 °C bis +175 °C sind,
- der Polymerblock P(B) ein Homopolymerblock oder Copolymerblock ist, der Monomere des Typs B enthält, wobei der (Co-)Polymerblock P(B) ein Polymerblock mit einer Erweichungstemperatur in einem Bereich von 10 °C bis 130 °C aufweist,
- die Polymerblöcke P(A) und P(B) bei 25 °C unter Anwendungsbedingungen nicht vollständig (homogen) mischbar sind.
- die Haftklebemasse insgesamt einen Brechungsindex $n_d$ von mehr als 1,52 bei 20 °C aufweist,
- zumindest einer der (Co-)Polymerblöcke P(A) einen Brechungsindex $n_d$ von mehr als 1,58 bei 20 °C aufweist, und
- der (Co-)Polymerblock P(B) einen Brechungsindex $n_d$ von mehr als 1,43 bei 20 °C aufweist.

Unter Erweichungstemperatur wird vorliegend eine Glasübergangstemperatur für amorphe Systeme und eine Schmelztemperatur bei semikristallinen Polymeren verstanden. Die hier angegebenen Temperaturen entsprechen solchen, die aus quasistationären Experimenten wie zum Beispiel mit Hilfe der Differential Scanning Calorimetry (DSC) erhalten werden.

Bei einer derartigen Blockcopolymer-basierenden Klebemasse können günstigerweise alle (Co-)Polymerblökke P(A) jeweils einen Brechungsindex $n_d$ von mehr 1,58 bei 20°C aufweisen. Zudem kann das zumindest ein Blockcopolymer in der Haftklebemasse auch zu einem Masseanteil von 50 Gew.-% oder mehr vorliegen.

Die Polymerblöcke P(B) aus obigem allgemeinen Blockcopolymer werden im Folgenden als Elastomerblöcke bezeichnet, wohingegen die Polymerblöcke P(A) demgemäß Hartblöcken entsprechen.

Unter den Haftklebemassen auf Blockcopolymerbasis haben sich insbesondere solche Haftklebemassen als ausnehmend günstig herausgestellt, die einen Brechungsindex $n_d$ von mehr als 1,52 besitzen und bei denen der Aufbau des Blockcopolymers oder der Blockcopolymere durch eine oder mehrere der folgenden allgemeinen Formeln beschrieben werden kann:

$$P(A)\text{-}P(B)\text{-}P(A) \qquad (PI)$$

$$P(B)\text{-}P(A)\text{-}P(B)\text{-}P(A)\text{-}P(B) \qquad (PII)$$

$$[P(A)\text{-}P(B)]_nX \qquad (PIII)$$

$$[P(A)\text{-}P(B)]_nX[P(A)]_m \qquad (PIV).$$

Hierin stellen n und m positive ganze Zahlen dar, wobei gilt $3 \leq n \leq 12$ und $3 \leq m \leq 12$. X bezeichnet ein chemisches Bauelement, das als multifunktionelle Verzweigungseinheit dient, über die verschiedene Zweige des Polymers miteinander verknüpft sind. Ferner sind die Polymerblöcke P(A) voneinander unabhängige Homopolymerblöcke oder Copolymerblöcke, die jeweils zu mindestens 75 Gew.-% Monomere des Typs A enthalten, wobei die (Co-)Polymerblöcke P(A) jeweils Polymerblöcke mit Erweichungstemperaturen in einem Bereich von 0 °C bis +175 °C und mit einem Brechungsindex $n_d$ von mehr als 1,58 bei 20 °C sind. Dementsprechend ist der Polymerblock P(B) bzw. sind die Polymerblöcke P(B) Homopolymerblöcke oder Copolymerblöcke, die Monomere des Typs B enthalten, wobei (Co-)Polymerblöcke P(B) Polymerblöcke mit Erweichungstemperaturen in einem Bereich von 10 °C bis 130 °C und einem Brechungsindex $n_d$ von mehr als 1,43 bei 20 °C sind.

Bei den Polymerblöcken P(A) kann es sich um Polymerketten einer einzigen Monomersorte vom dem Typ A oder um Copolymere aus Monomeren verschiedener Strukturen vom Typ A handeln, gegebenenfalls um Copolymere, die zu mindestens 75 Gew.-% Monomere vom Typ A und zu maximal 25 Gew.-% Monomere vom Typ B umfassen. Insbesondere können die eingesetzten Monomere vom Typ A in ihrer chemischen Struktur und/oder in der Länge der Seitenketten variieren. Die Polymerblöcke umfassen somit die Spanne zwischen vollkommen homogenen Polymeren über Polymere aus Monomeren gleicher chemischer Grundstruktur aber unterschiedlicher Kettenlänge und solchen gleicher Anzahl an Kohlenstoffatomen aber unterschiedlicher Isomerie bis hin zu statistisch polymerisierten Blöcken aus unterschiedlich langen Monomeren unterschiedlicher Isomerie vom Typ A. Entsprechendes gilt für die Polymerblöcke P(B) bezüglich der Monomere vom Typ B.

Die Einheit P(A)-P(B)-P(A) kann dabei sowohl symmetrisch - etwa entsprechend $P^1(A)\text{-}P(B)\text{-}P^2(A)$ mit $P^1(A) = P^2(A)$] - als auch unsymmetrisch aufgebaut sein, etwa entsprechend der Formel $P^3(A)\text{-}P(B)\text{-}P^4(A)$ mit $P^3(A) \neq P^4(A)$, wobei aber sowohl $P^3(A)$ als auch $P^4(A)$ jeweils Polymerblöcke im Sinne der Definition für P(A) sind. $P^3(A)$ und $P^4(A)$ können sich insbesondere in ihrer chemischen Zusammensetzung und/oder ihrer Kettenlänge unterscheiden.

Die Blockcopolymere können dabei einen symmetrischen Aufbau aufweisen, so dass in der Kettenlänge und/oder der chemischen Struktur identische Polymerblöcke P(A) und/oder dass in der Kettenlänge und/oder der chemischen Struktur identische Polymerblöcke P(B) vorliegen.

Ausgangsmonomere des Typs A für die Polymerblöcke P(A) können beispielsweise derart ausgewählt werden, dass die resultierenden Polymerblöcke P(A) mit den Polymerblöcken P(B) nicht mischbar sind und dementsprechend eine Mikrophasenseparation eintritt. Der Begriff der "Mikrophasenseparation" bezieht sich hierbei auf die Ausbildung von separierten Mikrophasen, so dass die unterschiedlichen Polymerblöcke beispielsweise in unterschiedlichen elongierten mikrophasenseparierten Bereichen (Domänen) vorliegen - etwa in Form von prolaten, mithin uniaxial elongierten (zum Beispiel stäbchenförmigen), oblaten, mithin biaxial elongierten (zum Beispiel schichtförmigen) Strukturelementen - oder dreidimensional cokontinuierliche mikrophasenseparierte Bereiche oder eine kontinuierliche Matrix einer Art an Polymerblöcken mit darin dispergierten Bereichen einer anderen Art an Polymerblöcken ausbilden können. Typischerweise sind in den erfindungsgemäß eingesetzten Systemen die Domänengrößen kleiner als 400 nm oder bevorzugt sogar kleiner als 200 nm.

Geeignete Monomere des Typs A enthalten eine C-C-Doppelbindung, insbesondere eine oder mehrere Vinylgruppen im eigentlichen Sinne und/oder vinylähnliche Gruppen. Als vinylähnliche Gruppen werden hier solche Gruppen bezeichnet, bei der die Wasserstoffatome der ungesättigten C-Atome teilweise oder vollständig durch organische und/oder anorganische Reste substituiert sind. In diesem Sinne zählen auch Acrylsäure, Methacrylsäure und/oder deren Derivate zu den vinylähnliche Gruppen aufweisenden Verbindungen. Vorstehende Verbindungen werden im Weiteren zusammenfassend als Vinylverbindungen bezeichnet.

Vorteilhafte Beispiele für Verbindungen, die als Monomere des Typs A eingesetzt werden, sind Vinylaromaten, die als Polymerisate einen Brechungsindex von mehr als 1,58 besitzen (bei 25°C). Konkrete Monomere, die hier lediglich beispielhaft und damit nicht umfassend aufgeführt sind, sind etwa Styrol, $\alpha$-Methylstyrol, o-Methylstyrol, o-Methoxystyrol, p-Methoxystyrol oder 4-Methoxy-2-methylstyrol.

Weiterhin lassen sich als Monomere des Typs A vorteilhaft Acrylate - wie zum Beispiel mit Acrylat terminiertes Polystyrol oder $\alpha$-Bromphenylacrylat - und/oder Methacrylate wie beispielsweise mit Methacrylat terminiertes Polystyrol, das etwa als Methacromer PS 12 von der Firma Polymer Chemistry Innovations erhältlich ist, 1,2-Diphenylethylmethacrylat, Diphenylmethylmethacrylat, o-Chlorbenzylmethacrylat, p-Bromphenylmethacrylat und/oder Acrylamide einsetzen, beispielsweise N-Benzylmethacrylamid.

Dabei können auch mehrere Monomere miteinander gemischt eingesetzt werden. Da zur Erzielung eines Brechungsindex $n_d$ von mehr als 1,58 für die Polymerblöcke P(A) grundsätzlich auch Monomergemische eingesetzt werden können, kann auch eine oder mehrere Komponenten als Homopolymer einen Brechungsindex $n_d$ von weniger als 1,58 besitzen (bei 25 °C). Konkrete Beispiele für derartige Comonomere (ohne Anspruch auf Vollständigkeit) sind o-Cresylmethacrylat, Phenylmethacrylat, Benzylmethacrylat oder o-Methoxyphenylmethacrylat.

Weiterhin können die Polymerblöcke P(A) aber auch derart als Copolymere aufgebaut sein, dass sie zu mindestens 75 Gew.-% aus den vorstehenden Monomeren des Typs A oder aber aus einem Gemisch dieser Monomere bestehen, was zu einer hohen Erweichungstemperatur führt, zu maximal 25 Gew.-% auch Monomere des Typs B enthalten können, was zu einer Erniedrigung der Erweichungstemperatur des Polymerblocks P(A) führt. In diesem Sinne seien beispielhaft Alkylacrylate genannt, die untenstehend entsprechend der Struktur B1 und dem darunter angeführten definiert sind.

Monomere des Typs B für den Polymerblock P(B) werden vorteilhafterweise ebenfalls so gewählt, dass diese C-C-Doppelbindungen (besonders Vinylgruppen und vinylähnliche Gruppen) aufweisen, wobei hierfür vorteilhafterweise darauf zu achten ist, dass der Polymerblock P(B) einen Brechungsindex $n_d$ von mindestens 1,43 aufweist.

Als Monomere des Typs B werden günstigerweise Acrylatmonomere eingesetzt. Hierfür sind prinzipiell alle dem Fachmann geläufigen Acrylatverbindungen einsetzbar, die sich zur Synthese von Polymeren eignen. Bevorzugt werden solche Monomere gewählt, die Glasübergangstemperaturen des Polymerblocks P(B) auch in Kombination mit einem oder mehreren weiteren Monomeren von weniger als +10 °C bedingen. Entsprechend können auch bevorzugt Vinylmonomere gewählt werden.

Für die Präparation der Polymerblöcke P(B) werden vorteilhaft zu 75 bis 100 Gew.-% Acrylsäure und/oder Methacrylsäurederivate der allgemeinen Struktur

$$CH_2=C(R°)(COOR°°) \qquad (B1)$$

eingesetzt, wobei R° = H oder $CH_3$ und R°° = H oder lineare, verzweigte oder ringförmige, gesättigte oder ungesättigte Kohlenwasserstoffketten mit 1 bis 30 Kohlenstoffatomen darstellt, insbesondere mit 4 bis 18 Kohlenstoffatomen, sowie maximal 25 Gew.-% an Monomeren B2 aus der Gruppe der Vinylverbindungen, wobei diese Monomere günstigenfalls weitere funktionelle Gruppen enthalten.

Die vorstehenden Gewichtsprozentangaben addieren sich bevorzugt zu 100 %, die Summe kann aber auch weniger als 100 Gew.-% betragen, sofern weitere (polymerisierbare) Monomere vorhanden sind.

Acrylmonomere des Typs B, die sehr bevorzugt im Sinne der Verbindung B1 als Komponenten für die Polymerblöcke P(B) eingesetzt werden, umfassen Acrylsäureester und Methacrylsäureester mit Alkyl-, Alkenyl- und/oder Alkinylgruppen, jeweils bestehend aus 4 bis 18 C-Atomen. Spezifische Beispiele für entsprechende Verbindungen sind - ohne sich durch diese Aufzählung einschränken zu wollen - n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere wie etwa 2-Ethylhexylacrylat und Isooctylacrylat, sowie cyclische Monomere wie zum Beispiel Cyclohexyl- oder Norbornylacrylat und Isobornylacrylat.

Weiterhin können optional als Monomere B2 für Polymerblöcke P(B) Vinylmonomere aus den folgenden Gruppen eingesetzt werden: Vinylester, Vinylether, Vinylhalogenide, Vinylidenhalogenide sowie Vinylverbindungen, die aromatische Cyclen und Heterocyclen in $\alpha$-Stellung enthalten. Auch hier seien erfindungsgemäß einsetzbare Monomere beispielhaft ausgewählt benannt: Vinylacetat, Vinylformamid, Vinylpyridin, Ethylvinylether, 2-Ethylhexylvinylether, Butylvinylether, Vinylchlorid, Vinylidenchlorid und Acrylnitril.

Als besonders bevorzugte Beispiele für vinylgruppenhaltige Monomere im Sinne von Monomer B2 für den Elastomerblock P(B) eignen sich weiterhin Hydroxyethylacrylat, Hydroxypropylacrylat, Hydroxyethylmethacrylat, Hydroxypropylmethacrylat, N-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige

zu nennen.

Sämtliche dieser einsetzbaren Monomere können ebenfalls in einer halogenierten Form verwendet werden.

Besonders bevorzugt weisen erfindungsgemäß eingesetzte Haftklebemassen mit einem Brechungsindex von mehr als 1,52 einen Polymerblock oder mehrere Polymerblöcke mit einer oder mehreren aufgepfropften Seitenketten auf. Dabei kann es sich um Verbindungen handeln, bei denen die Seitenketten durch einen so genannten "graft-from"-Prozess (Aufpolymerisation einer Seitenkette ausgehend von einem bestehenden Polymerrückgrat) oder durch einen so genannten "graft-to"-Prozess (Anbindung von Polymerketten an ein Polymerrückgrat über polymeranaloge Reaktionen) erhalten werden.

Als Makromonomere des Typs A und B können insbesondere zur Herstellung von Blockcopolymeren mit Seitenketten derartig funktionalisierte Monomere gewählt werden, die einen "graft-from"-Prozess zum Aufpfropfen von Seitenketten ermöglichen. Hier sind insbesondere Acrylat- und Methacrylatmonomere zu nennen, die als Funktionalisierung Halogene oder andere funktionellen Gruppen tragen, die beispielsweise einen ATRP-Prozess (Atom Transfer Radical Polymerization) erlauben. In diesem Zusammenhang sei auch die Möglichkeit genannt, über die Zugabe von Makromonomeren während der Polymerisation gezielt Seitenketten in die Polymerketten einzuführen.

In einer speziellen Ausführung dieser Erfindung sind eine oder mehrere funktionelle Gruppen in die Polymerblöcke P(B) eingebaut, die eine strahlenchemische Vernetzung der Polymerblöcke insbesondere mittels Bestrahlung mit ultraviolettem Licht (UV-Licht) oder mit schnellen Elektronen (Elektronenstrahlhärtung) erlauben. Als Monomereinheiten des Typs B können mit dieser Zielsetzung insbesondere Acrylester genutzt werden, die einen ungesättigten Kohlenwasserstoffrest mit 3 bis 18 Kohlenstoffatomen enthalten, der mindestens eine Kohlenstoff-Kohlenstoff-Doppelbindung enthält. Als derartige mit Doppelbindungen modifizierte Acrylate eignen sich besonders Allylacrylat und acrylierte Zimtsäureester. Neben Acrylmonomeren lassen sich als Monomere für den Polymerblock P(B) günstigerweise auch Vinylverbindungen mit während der (radikalischen) Polymerisation des Polymerblockes P(B) nicht reagierenden Doppelbindungen einsetzen. Besonders bevorzugte Beispiele für dementsprechende Comonomere sind Isopren und/oder Butadien, aber auch Chloropren.

In einer weiteren Ausführungsform der Haftklebemasse sind Polymerblöcke P(A) und/oder P(B) derart funktionalisiert, dass eine thermisch initiierte Vernetzung durchführbar ist. Als Vernetzer können unter anderem gewählt werden: Epoxide, Aziridine, Isocyanate, Polycarbodiimide und Metallchelate, um nur einige zu nennen.

Ein bevorzugtes Charakteristikum der Haftklebemassen ist, dass das zahlengemittelte mittlere Molekulargewicht $M_n$ zumindest eines der Blockcopolymere, bei mehreren Blockcopolymeren insbesondere aller Blockcopolymere zwischen 10.000 und 600.000 g/mol liegt, bevorzugt zwischen 30.000 und 400.000 g/mol und besonders bevorzugt zwischen 50.000 g/mol und 300.000 g/mol.

Der Anteil der Polymerblöcke P(A) liegt vorteilhaft in einem Bereich von 5 bis 40 Gew.-% des gesamten Blockcopolymers, bevorzugt zwischen 7,5 und 35 Gew.-% und besonders bevorzugt zwischen 10 und 30 Gew.-%. Die Polydispersität D des Blockcopolymers ist bevorzugt kleiner als 3, gegeben durch den Quotienten aus Massenmittel $M_w$ und Zahlenmittel $M_n$ der Molekulargewichtverteilung. Bei mehreren Blockcopolymeren in der erfindungsgemäßen Haftklebemasse gelten die vorstehenden Angaben für die Anteile und die Polydispersität D günstigerweise für zumindest eines der Blockcopolymere, bevorzugt jedoch für alle vorhandenen Blockcopolymere.

Ferner kann das Verhältnis $V_{A/B}$ [$V_{A/B} = \bar{\ell}_{P(A)} / \bar{\ell}_{P(B)}$] der mittleren Kettenlänge $\bar{\ell}_{P(A)}$ der Polymerblöcke P(A) zu den Kettenlängen $\bar{\ell}_{P(B)}$ der Polymerblöcke P(B) so gewählt werden, dass die Polymerblöcke P(A) als disperse Phase ("Domänen") in einer kontinuierlichen Matrix der Polymerblöcke P(B) vorliegen, insbesondere als kugelförmige oder verzerrt kugelförmige oder zylinderförmige Domänen. Dies kann insbesondere bei einem Gehalt an Polymerblöcken P (A) von weniger als etwa 25 Gew.-% der Fall sein. Die Ausbildung von hexagonal gepackten zylindrischen Domänen der Polymerblöcke P(A) ist ebenfalls möglich.

Bei weiteren erfindungsgemäß verwendbaren Haftklebemassen beinhaltet die Haftklebemasse eine Mischung (Blend) aus

- zumindest einem Diblockcopolymer mit zumindest einem Triblockcopolymer, oder
- zumindest einem Diblockcopolymer mit zumindest einem sternförmigen Blockcopolymer, oder
- zumindest einem Triblockcopolymer mit zumindest einem sternförmigen Blockcopolymer,

wobei bevorzugt zumindest eine der vorgenannten Komponenten, vorteilhafterweise alle Blockcopolymer-Komponenten des Blends Blockcopolymere im Sinne der Definition des Hauptanspruchs darstellen.

So haben sich etwa als derartige Blends die folgenden Mischungen als günstig herausgestellt, die Blends der die Abfolge P(A)-P(B)-P(A) enthaltenden obigen Blockcopolymere mit Diblockcopolymeren P(A)-P(B) umfassen, wobei zur Herstellung der entsprechenden Polymerblöcke P(A) und P(B) die gleichen Monomere wie oben beschrieben genutzt werden können. Außerdem können einer Haftklebemasse, die Blockcopolymere wie insbesondere Triblockcopolymer

PI oder ein Blockcopolymer/Diblockcopolymer-Blend enthält, zur Verbesserung ihrer Eigenschaften Polymere P'(A) und/ oder P'(B) zugesetzt werden.

Dementsprechend können erfindungsgemäß auch Haftklebemassen auf Basis eines Blends von zumindest einem Blockcopolymer, das bei 20 °C einen Brechungsindex $n_d$ von mehr als 1,52 aufweist, und einem Diblockcopolymer P(A)-P(B) verwendet werden,

- wobei die Polymerblöcke P(A) der Diblockcopolymere unabhängig voneinander Homo-oder Copolymerblöcke aus den Monomeren des Typs A repräsentieren und jeweils eine Erweichungstemperatur in einem Bereich von 0 °C bis +175 °C sowie einen Brechungsindex $n_d$ von mehr als 1,58 aufweisen, und

- wobei die Polymerblöcke P(B) der Diblockcopolymere unabhängig voneinander Homo-oder Copolymerblöcke aus den Monomeren des Typs B repräsentieren und jeweils eine Erweichungstemperatur in einem Bereich von 130 °C bis +10 °C sowie einen Brechungsindex $n_d$ von mehr als 1,43 aufweisen,

und/oder mit Polymeren P'(A) und/oder P'(B),

- wobei die Polymere P'(A) Homo- und/oder Copolymere aus Monomeren des Typs A repräsentieren und jeweils eine Erweichungstemperatur in einem Bereich von 0 °C bis +175 °C sowie einen Brechungsindex $n_d$ von mehr als 1,58 aufweisen,

- wobei die Polymere P'(B) Homo- und/oder Copolymere aus Monomeren des Typs B repräsentieren und jeweils eine Erweichungstemperatur in einem Bereich von 130 °C bis +10 °C sowie einen Brechungsindex $n_d$ von mehr als 1,43 aufweisen, und

- wobei die Polymere P'(A) und P'(B) bevorzugt mit den Polymerblöcken P(A) beziehungsweise P(B) der obigen Blockcopolymere mischbar sind.

Sofern sowohl Polymere P'(A) als auch Polymere P'(B) zugemischt sind, werden diese vorteilhaft derart gewählt, dass die Polymere P'(A) und P'(B) nicht homogen miteinander mischbar sind.

Als Monomere für die Diblockcopolymere P(A)-P(B), für die Polymere P'(A) beziehungsweise P'(B) werden bevorzugt die bereits genannten Monomere des Typs A und B eingesetzt.

Die Diblockcopolymere weisen dabei üblicherweise ein zahlengemitteltes mittleres Molekulargewicht $M_n$ zwischen 5.000 und 600.000 g/mol, bevorzugt zwischen 15.000 und 400.000 g/mol und besonders bevorzugt zwischen 30.000 und 300.000 g/mol. Sie besitzen vorteilhaft eine Polydispersität $D = M_w/M_n$, die nicht größer als 3 ist. Günstig ist dabei, wenn der Anteil der Polymerblöcke P(A) in Bezug auf die Zusammensetzung des Diblockcopolymers zwischen 3 und 50 Gew.-% oder sogar zwischen 5 und 35 Gew.-% liegt.

Typische Einsatzmengenverhältnisse von Diblockcopolymeren im Blend liegen bei maximal 250 Gewichtsteilen auf 100 Gewichtsteile Blockcopolymer, das die Einheit P(A)-P(B)-P(A) enthält. Die Polymere P'(A) beziehungsweise P'(B) können dabei als Homo-und auch ais Copolymere aufgebaut sein. Sie werden entsprechend dem oben gesagten häufig derart gewählt, dass sie mit den Polymerblöcken P(A) beziehungsweise P(B) des obigen Blockcopolymers verträglich sind. Die Kettenlänge der Polymere P'(A) beziehungsweise P'(B) ist in bevorzugter Weise derart gewählt, dass sie die Kettenlängen des jeweiligen mit ihnen mischbaren und/oder assoziierbaren Polymerblocks nicht übersteigt, vorteilhaft um einen Betrag von etwa 10 % geringer als diese oder sogar um 20 % niedriger. Der B-Block kann auch so gewählt werden, dass seine Länge die Hälfte der Blocklänge des B-Blocks des Triblockcopolymers nicht übersteigt.

Insgesamt können die Zusammensetzungen für die Klebemassen durch Veränderung von Art und Anteil der Edukte in weiten Rahmen variiert werden. Ebenso können weitere Produkteigenschaften wie beispielsweise Farbe, thermische oder elektrische Leitfähigkeit durch Zusatz von Hilfsstoffen gezielt gesteuert werden. Dazu kann eine Klebemasse weitere Rezeptierungsbestandteile und/oder Hilfsstoffe umfassen wie zum Beispiel Weichmacher (Plastifizierungsmittel), Füllstoffe (wie zum Beispiel Fasern, Zinkoxidpartikel, Voll- oder Hohlglaskugeln, Mikrokugeln aus anderen Materialien, Kieselsäure, Silikate), elektrisch leitfähige Materialien (etwa undotierte oder dotierte konjugierte Polymere oder Metallsalze) und/oder Alterungsschutzmittel (etwa primäre oder sekundäre Antioxidantien) oder Lichtschutzmittel. Wichtig ist hierbei allerdings, dass diese weiteren Bestandteile die Transmission der Haftklebemasse für Licht aus einem bestimmten Wellenlängenbereich nicht oder nur unwesentlich verringern. Neben der Art des Hilfsstoffes hängt dies von der Konzentration des Hilfsstoffes in der Klebemasse sowie der konkreten Anwendungsform des Hilfsstoffes ab, beispielsweise der mittleren Partikelgröße. Die Rezeptierung der Klebemasse mit derartigen weiteren Bestandteilen wie zum Beispiel Füllstoffen und Weichmachern, ist ebenfalls Stand der Technik.

Um die konkreten klebtechnischen Eigenschaften der Klebemasse der jeweiligen Anwendung anzupassen, können den Haftklebemassen klebkraftsteigernde oder klebrigmachende Harze beigemischt sein. Als derartige Harze

- so genannte Klebharze - sind ausnahmslos alle bekannten und in der Literatur beschriebenen Klebharze einsetzbar, die die Transparenz der Klebemasse nicht verringern. Übliche Klebharze sind etwa Pinenharze, Indenharze und Kolophoniumharze, deren disproportionierte, hydrierte, polymerisierte und veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze. Diese und weitere Harze können einzeln oder in beliebigen Kombinationen eingesetzt werden, um die Eigenschaften der resultierenden Klebemasse anwendungsgemäß einzustellen. Im allgemeinen lassen sich alle mit dem entsprechenden thermoplastischen Material kompatiblen (löslichen) Harze einsetzen, insbesondere aliphatische, aromatische oder alkylaromatische Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Hierbei ist in besonderem Maße zu beachten, dass ausschließlich sehr gut mit dem Polymer verträgliche und im wesentlichen transparente Harze eingesetzt werden. Diese Anforderungen erfüllen unter anderem einige hydrierte oder teilhydrierte Harze. Bei der Auswahl der Harze ist natürlich ebenfalls ein etwaiger Einfluss auf den Brechungsindex zu berücksichtigen. So können einige Harze mit hohem hydrierten und aliphatischen Anteil den Brechungsindex beispielsweise absenken, während andere Harze mit hohem aromatischen Anteil den Brechungsindex anheben.

Zur Polymerisation werden die Monomere so ausgewählt, dass die resultierenden verklebbaren Polymere bei Raumtemperatur oder höheren Temperaturen als Hitze-aktivierbare Klebemassen oder als Haftklebemassen eingesetzt werden können, insbesondere, dass die resultierenden Basispolymere klebende oder haftklebende Eigenschaften im Sinne des "Handbook of Pressure Sensitive Adhesive Technology" von Donatas Satas (van Nostrand, New York 1989) aufweisen. Eine gezielte Steuerung der Glasübergangstemperatur lässt sich hierzu etwa über die Zusammenstellung der Monomermischung steuern, die der Polymerisation zugrunde liegt.

Zur Erzielung einer Glasübergangstemperatur $T_G$ der Polymere von $T_G \geq 25°C$ für Hitze-aktivierbare Klebemassen werden die Monomere etwa derart ausgesucht und die mengenmäßige Zusammensetzung der Monomermischung so gewählt, dass sich der gewünschte Wert der Glasübergangstemperatur $T_G$ für das Polymer nach Gleichung (G1) in Analogie zu der von Fox vorgestellten Gleichung (vgl. T. G. Fox, Bull. Am. Phys. Soc. 1 (1956) 123) wie folgt ergibt:

$$\frac{1}{T_G} = \sum_n \frac{w_n}{T_{G,n}} \qquad \text{(G1)} .$$

Hierin stellt n die Laufzahl über die eingesetzten Monomere dar, $W_n$ den Massenanteil des jeweiligen Monomers n (in Gew.-%) und $T_{G,n}$ die jeweilige Glasübergangstemperatur des Homopolymers aus dem jeweiligen Monomer n (in K).

Die Herstellung der Poly(meth)acrylathaftklebemassen kann in den üblichen Syntheseverfahren für derartige Polymere erfolgen, zum Beispiel in konventionellen radikalischen Polymerisationen oder in kontrollierten radikalischen Polymerisationen. Für die radikalisch verlaufenden Polymerisationen werden Initiatorsysteme eingesetzt, die weitere radikalische Initiatoren zur Polymerisation enthalten, insbesondere thermisch zerfallende radikalbildende Azo- oder Peroxo-Initiatoren. Prinzipiell eignen sich jedoch alle dem Fachmann geläufigen für Acrylate üblichen Initiatoren. Die Erzeugung von C-zentrierten Radikalen ist etwa im Houben-Weyl, Methoden der Organischen Chemie, Vol. E 19a, S. 60-147 beschrieben. Diese Methoden können unter anderem in analoger Weise angewendet werden.

Beispiele für Radikalquellen von geeigneten Radikalinitiatorsystemen sind zum Beispiel Peroxide, Hydroperoxide und Azoverbindungen, wie Kaliumperoxodisulfat, Dibenzoylperoxid, Cumolhydroperoxid, Cyclohexanonperoxid, Di-t-Butylperoxid, Azodiisobutyronitril (AIBN), Cyclohexylsulfonylacetylperoxid, Diisopropyl-percarbonat, t-Butylperoctoat, Benzpinacol und dergleichen. So kann beispielsweise als radikalischer Initiator 1,1'-Azo-bis-(cyclohexancarbonsäurenitril) eingesetzt werden, der unter der Bezeichnung Vazo 88™ von der Firma DuPont im Handel erhältlich ist.

Die zahlengemittelten mittleren Molekulargewichte $M_n$ der bei der radikalischen Polymerisation entstehenden Klebemassen werden zum Beispiel so gewählt, dass sie in einem Bereich von 200.000 bis 4.000.000 g/mol liegen; speziell für eine Verwendung als Schmelzhaftkleber werden Haftklebemassen mit mittleren Molekulargewichten $M_n$ von 400.000 bis 1.400.000 g/mol hergestellt. Die Bestimmung des mittleren Molekulargewichtes erfolgt über Größenausschlusschromatographie (SEC) oder Matrixunterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Üblicherweise soll dabei die verwendete Lösungsmittelmenge so gering wie möglich gehalten werden. Geeignete organische Lösungsmittel sind etwa reine Alkane (beispielsweise Hexan, Heptan, Octan, Isooctan), aromatische Kohlenwasserstoffe (beispielsweise Benzol, Toluol, Xylol), Ester (beispielsweise Essigsäureethylester, Essigsäurepropylester, Essigsäurebutylester oder Essigsäurehexylester), halogenierte Kohlenwasserstoffe (beispielsweise Chlorbenzol), Alkanole (wie beispielsweise Methanol, Ethanol, Ethylenglykol, Ethylenglykolmonomethylether) und Ether (beispielsweise Diethylether, Dibutylether) sowie Gemische davon. Wässrige Polymerisationsreaktionen können mit einem mit Wasser mischbaren oder hydrophilen Colösungsmittel versetzt werden, um sicherzustellen, dass das Reaktionsgemisch während des Monomerumsatzes als homogene Phase vorliegt. Verwendbar sind zum Beispiel Colösungsmittel aus der Gruppe, bestehend aus aliphatischen Alkoholen, Glykolen, Ethern, Glykolethern, Pyrrolidinen, N-Alkylpyrrolidinonen, N-Alkylpyrrolidonen, Polyethylenglykolen, Polypropylenglykolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen sowie Derivaten und Gemischen davon.

Die Polymerisationsdauer kann - je nach Umsatz und Temperatur - zwischen 2 und 72 Stunden betragen. Je höher die Reaktionstemperatur gewählt werden kann, das heißt, je höher die thermische Stabilität des Reaktionsgemisches ist, desto kürzer kann die Reaktionsdauer ausfallen.

Zur Initiierung der Polymerisation ist für thermisch zerfallende Initiatoren die Zufuhr von Wärme wesentlich. Die Polymerisation kann - je nach Initiatortyp - für solche thermisch zerfallenden Initiatoren durch Erwärmen auf 50 °C bis 160 °C gestartet werden.

Um Poly(meth)acrylathaftklebemassen mit einer engen Molekulargewichtsverteilung zu erhalten, werden auch kontrollierte radikalische Polymerisationen durchgeführt. Zur Polymerisation wird dann bevorzugt ein Kontrollreagenz mit der folgenden allgemeinen Formel eingesetzt:

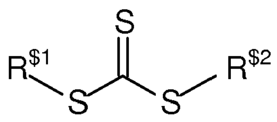

(TTC 1)

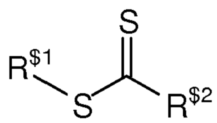

(THE 1)

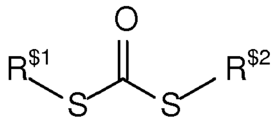

(THI 1)

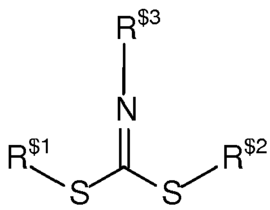

(THI 2)

$R^{\$1}$ und $R^{\$2}$ können hierfür gleich oder unabhängig voneinander gewählt werden und $R^{\$3}$ gegebenenfalls zu einer oder beiden Gruppen $R^{\$1}$ und $R^{\$2}$ identisch oder unterschiedlich gewählt werden. Die Reste werden dabei sinnvollerweise aus einer der folgenden Gruppen gewählt:

- $C_1$- bis $C_{18}$-Alkylreste, $C_3$- bis $C_{18}$-Alkenylreste und $C_3$- bis $C_{18}$-Alkinylreste, jeweils linear oder verzweigt;
- $C_1$- bis $C_{18}$-Alkoxyreste;
- $C_1$- bis $C_{18}$-Alkylreste, $C_3$- bis $C_{18}$-Alkenylreste und $C_3$- bis $C_{18}$-Alkinylreste, jeweils durch zumindest eine OH-Gruppe oder ein Halogenatom oder einen Silylether substituiert;
- $C_2$- bis $C_{18}$-Hetero-Alkylreste mit mindestens einem O-Atom und/oder einer NR*-Gruppe in der Kohlenstoffkette, wobei R* ein beliebiger Rest ist, insbesondere ein organischer Rest;
- $C_1$- bis $C_{18}$-Alkylreste, $C_3$- bis $C_{18}$-Alkenylreste und $C_3$- bis $C_{18}$-Alkinylreste, jeweils mit zumindest einer Estergruppe, Amingruppe, Carbonatgruppe, Cyanogruppe, Isocyanogruppe und/oder Epoxidgruppe und/oder mit Schwefel substituiert;
- $C_3$- bis $C_{12}$-Cycloalkylreste;
- $C_6$- bis $C_{18}$-Arylreste und $C_6$- bis $C_{18}$-Benzylreste;

- Wasserstoff.

Kontrollreagenzien des Typs TTC I stammen dabei üblicherweise aus Verbindungsklassen der vorstehend aufgelisteten Typen, die im Folgenden zusätzlich spezifiziert sind:

Die jeweiligen Halogenatome sind Chlor und/oder Brom und/oder gegebenenfalls auch Fluor und/oder Jod.

Die Alkyl-, Alkenyl- und Alkinylreste in den verschiedenen Substituenten weisen lineare und/oder verzweigte Ketten auf.

Beispiele für Alkylreste, die 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.

Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.

Beispiele für Alkinyl mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl und Hydroxyhexyl.

Beispiele für Halogen-substituierte Alkylreste sind Dichlorbutyl, Monobrombutyl und Trichlorhexyl.

Ein üblicher $C_2$- bis $C_{18}$-Hetero-Alkylrest mit mindestens einem O-Atom in der Kohlenstoffkette ist beispielsweise $-CH_2-CH_2-O-CH_2-CH_3$.

Als $C_3$- bis $C_{12}$-Cycloalkylreste dienen beispielsweise Cyclopropyl, Cyclopentyl, Cyclohexyl und Trimethylcyclohexyl.

Als $C_6$- bis $C_{18}$-Arylreste dienen beispielsweise Phenyl, Naphthyl, Benzyl, 4-tert-Butylbenzyl oder andere substituierte Phenyle wie etwa solche, die mit einer Ethylgruppe und/oder mit Toluol, Xylol, Mesitylen, Isopropylbenzol, Dichlorbenzol oder Bromtoluol substituiert sind.

Die vorstehende Auflistung bietet hierbei lediglich Beispiele für die jeweiligen Verbindungsklassen und ist daher nicht vollständig.

Ferner ist es möglich, die Polymerisation der (Meth)Acrylathaftklebemassen in der Substanz durchzuführen, ohne Zusatz von Lösemitteln. Dies kann nach üblichen Methoden geschehen, etwa mittels einer Präpolymerisation. Dabei wird die Polymerisation mit Licht aus dem UV-Bereich des Spektrums initiiert und die Reaktion bis zu einem geringen Umsatz von etwa 10-30 % fortgesetzt. Die so erhaltene hochviskose Präpolymermasse kann anschließend als Polymersirup weiterverarbeitet werden, wobei es beispielsweise möglich ist, das Reaktionsgemisch zunächst in Folien eingeschweißt zu lagern - etwa in Eiswürfelschläuchen - und schließlich in Wasser zu einem hohem Endumsatz zu polymerisieren.

Die so erhaltenen Pellets lassen sich etwa als Acrylatschmelzkleber (Hot-Melt) einsetzen, wobei ein Aufschmelzen auf Folienmaterialien durchgeführt wird, die mit dem erhaltenen Polyacrylatprodukt kompatibel sind.

Als weiterer geeigneter Herstellprozess sei auf eine Variante der RAFT-Polymerisation (reversible addition-fragmentation chain transfer polymerization) hingewiesen. Ein derartiger Polymerisationsprozess ist zum Beispiel in WO 98/01478 A1 ausführlich beschrieben. Hierbei wird üblicherweise nur bis zu geringen Umsätzen polymerisiert, um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflussen würde, die Restmonomere beim Aufkonzentrieren das Lösemittelrecyclat verunreinigen und die damit gefertigten Selbstklebebänder ein starkes Ausgasungsverhalten zeigen würden. Um den Nachteil niedriger Umsätze zu umgehen, kann die Polymerisation mehrfach initiiert werden.

Als weitere kontrollierte radikalische Polymerisationsmethode können Nitroxid-gesteuerte Polymerisationen durchgeführt werden. Zur Radikalstabilisierung können dabei übliche Radikalstabilisatoren eingesetzt werden, etwa Nitroxide des Typs (NIT 1) oder (NIT 2) eingesetzt:

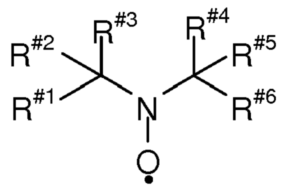

(NIT 1)

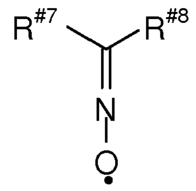

(NIT 2)

wobei $R^{\#1}$, $R^{\#2}$, $R^{\#3}$, $R^{\#4}$, $R^{\#5}$, $R^{\#6}$, $R^{\#7}$, $R^{\#8}$ unabhängig voneinander folgende Atome oder Gruppen darstellen können:

i) Halogenide wie zum Beispiel Chlor, Brom oder Jod,

ii) lineare, verzweigte, cyclische und heterocyclische Kohlenwasserstoffe mit 1 bis 20 Kohlenstoffatomen, die gesättigt, ungesättigt oder aromatisch sein können,

iii) Ester -COOR$^{\#9}$, Alkoxide -OR$^{\#10}$ und/oder Phosphonate -PO(OR$^{\#11}$)$_2$, wobei $R^{\#9}$, $R^{\#10}$ und/oder $R^{\#11}$ für Reste aus der obigen Gruppe ii) stehen.

Verbindungen der Struktur (NIT 1) oder (NIT 2) können auch an Polymerketten jeglicher Art gebunden sein (vorrangig in dem Sinne, dass zumindest einer der oben genannten Reste eine derartige Polymerkette darstellt) und somit beim Aufbau von Blockcopolymeren als Makroradikale oder Makroregler genutzt werden.

Als kontrollierte Regler für die Polymerisation können ebenfalls Verbindungen der folgenden Typen eingesetzt werden:

- 2,2,5,5-Tetramethyl-1-pyrrolidinyloxyl (PROXYL), 3-Carbamoyl-PROXYL, 2,2-Dimethyl-4,5-cyclohexyl-PROXYL, 3-oxo-PROXYL, 3-Hydroxylimin-PROXYL, 3-Aminomethyl-PROXYL, 3-Methoxy-PROXYL, 3-t-Butyl-PROXYL, 3,4-Di-t-butyl-PROXYL

- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl

- N-tert-Butyl-1-phenyl-2-methylpropylnitroxid

- N-tert-Butyl-1-(2-naphthyl)-2-methylpropylnitroxid

- N-tert-Butyl-1-diethylphosphono-2,2-dimethylpropylnitroxid

- N-tert-Butyl-1-dibenzylphosphono-2,2-dimethylpropylnitroxid

- N-(1-Phenyl-2-methyl propyl)-1-diethylphosphono-1-methylethylnitroxid

- Di-t-Butylnitroxid

- Diphenylnitroxid

- t-Butyl-t-amylnitroxid

Eine Reihe weiterer Polymerisationsmethoden, nach denen Klebemassen in alternativer Vorgehensweise hergestellt werden können, lassen sich aus dem Stand der Technik wählen:

So offenbart US 4,581,429 A ein kontrolliert radikalisches Polymerisationsverfahren, das als Initiator eine Verbindung der allgemeinen Formel R'R"N-O-Y anwendet, worin Y eine freie radikalische Spezies ist, die ungesättigte

Monomere polymerisieren kann. Die Reaktionen weisen aber im allgemeinen geringe Umsätze auf. Besonders problematisch ist die Polymerisation von Acrylaten, die nur zu sehr geringen Ausbeuten und bei geringen Molekularmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molekulargewichtverteilungen. WO 96/24620 A1 beschreibt ein Polymerisationsverfahren, bei dem spezielle Radikalverbindungen wie zum Beispiel phosphorhaltige, auf Imidazolidin basierende Nitroxide eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen. Ferner können entsprechende Weiterentwicklungen der Alkoxyamine und der korrespondierenden freien Nitroxide die Effizienz zur Herstellung von Polyacrylaten verbessern.

Als weitere kontrollierte Polymerisationsmethode lässt sich zur Synthese der Copolymere die "Atom Transfer Radical Polymerization" (ATRP; siehe oben) einsetzen, wobei als Initiator üblicherweise monofunktionelle oder difunktionelle sekundäre oder tertiäre Halogenide und zur Abstraktion des Halogenids bzw. der Halogenide Cu-, Ni-, Fe-, Pd-, Pt-, Ru-, Os-, Rh-, Co-, Ir-, Ag- oder Au-Komplexe (vgl. etwa EP 824 110 A1, EP 0 824 111 A1, EP 826 698 A1, EP 841 346 A1 oder EP 850 957 A1) eingesetzt werden. Unterschiedliche Möglichkeiten der ATRP sind ferner in US 5,945,491 A, US 5,854,364 A und US 5,789,487 A beschrieben.

Weiterhin kann ein Polymer für eine Poly(meth)acrylathaftklebemassen in einer lebenden Polymerisation hergestellt werden, beispielsweise in einer anionischen Polymerisation, wozu als Reaktionsmedium üblicherweise inerte Lösungsmittel zum Einsatz kommen, etwa aliphatische und cycloaliphatische Kohlenwasserstoffe oder aromatische Kohlenwasserstoffe.

Das lebende Polymer wird dabei im allgemeinen als $P_L$(A)-Me dargestellt, wobei Me ein Metall der Gruppe I des Periodensystems ist (beispielsweise Lithium, Natrium oder Kalium) und $P_L$(A) ein wachsender Polymerblock aus den Acrylatmonomeren ist. Das Molekulargewicht des Polymers wird hierbei durch das Verhältnis von Initiatorkonzentration zu Monomerkonzentration vorgegeben.

Als Polymerisationsinitiatoren eignen sich etwa n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und auch einsetzbar.

Weiterhin lassen sich auch difunktionelle Initiatoren einsetzen wie beispielsweise 1,1,4,4-Tetraphenyl-1,4-dilithiumbutan oder 1,1,4,4-Tetraphenyl-1,4-dilithiumisobutan. Ebenfalls verwendet werden können Coinitiatoren wie zum Beispiel Lithiumhalogenide, Alkalimetallalkoxide oder Alkylaluminium-Verbindungen. So können etwa die Liganden und Coinitiatoren so gewählt sein, dass Acrylatmonomere wie zum Beispiel n-Butylacrylat und 2-Ethylhexylacrylat direkt polymerisiert werden können und nicht im Polymer durch Umesterung mit dem entsprechenden Alkohol generiert werden müssen.

Die obenstehend dargestellten Klebemassen sowie weitere Klebemassen, die hier nicht ausführlich beschrieben, dem Fachmann jedoch ohne weiteres als Klebemassen bekannt sind, werden erfindungsgemäß in herkömmlichen Verfahren auf die Trägerfolie aufgetragen. Entsprechend dem jeweiligen Auftragungsverfahren kann die Klebemasse aus Lösung beschichtet werden. Zur Abmischung des Basispolymers mit weiteren Bestandteilen wie etwa Modifikationsharzen oder Hilfsstoffen können hierbei alle bekannten Misch- oder Rührtechniken eingesetzt werden. So können beispielsweise zur Herstellung einer homogenen Mischung statische oder dynamische Mischaggregate zum Einsatz gelangen. Eine Abmischung des Basispolymers mit Reaktivharzen kann aber auch in der Schmelze durchgeführt werden. Hierfür können Kneter oder Doppelschneckenextruder zum Einsatz kommen. Die Abmischung erfolgt bevorzugt in der Wärme, wobei die Mischungstemperatur deutlich niedriger sein sollte als die Aktivierungstemperatur für reaktive Prozesse im Mischaggregat, etwa für eine Reaktion der Epoxidharze.

Für eine Auftragung der Klebemasse aus der Schmelze kann das Lösemittel in einem Aufkonzentrationsextruder unter vermindertem Druck abgezogen werden, wozu beispielsweise Ein- oder Doppelschneckenextruder eingesetzt werden können, die bevorzugt das Lösemittel in der gleichen Vakuumstufe oder in verschiedenen Vakuumstufen abdestillieren und über eine Vorwärmung der Einspeisung verfügen. Vorteilhafterweise ist der Anteil an restlichem Lösemittel kleiner als 1 Gew.-% oder sogar kleiner als 0,5 Gew.-%.

Ferner können zusätzlich Vernetzer sowie Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer der Reaktionsmischung hinzugesetzt sein, etwa Lewis-Säuren, Metallchelate oder multifunktionelle Isocyanate.

Für eine optionale Vernetzung der Klebemassen können diesen beliebige geeignete Initiatoren und/oder Vernetzer zugesetzt werden. So können die Klebemassen beispielsweise für eine spätere Vernetzung während Bestrahlung mit UV-Licht UVabsorbierende Photoinitiatoren enthalten. Beispiele für geeignete Photoinitiatoren sind Benzoinether wie etwa Benzoinmethylether oder Benzoinisopropylether, substituierte Acetophenone wie etwa Dimethoxyhydroxyacetophenon oder 2,2-Diethoxyacetophenon (erhältlich als Irgacure 651® von Ciba Geigy), 2,2-Dimethoxy-2-phenyl-1-phenylethanon, substituierte α-Ketole wie etwa 2-Methoxy-2-hydroxypropiophenon, aromatische Sulfonylchloride wie etwa 2-Naphthylsulfonylchlorid und photoaktive Oxime wie etwa 1-Phenyl-1,2-propandion-2-(O-ethoxycarbonyl)oxim.

Die einsetzbaren Photoinitiatoren und andere Initiatoren vom Typ Norrish I oder Norrish II können substituiert sein und hierbei beliebige geeignete Reste aufweisen, beispielsweise Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin- oder Fluorenonreste, wobei diese Reste natürlich ihrerseits substituiert sein können, etwa mit einem oder mehreren Halogenatomen, Alkyloxygruppen, Aminogruppen und/oder Hydroxygruppen. Einen repräsentativen Überblick bietet hierzu Fouassier in "Photoinititation, Photopolymerization and Photocuring: Fundamentals and Applications" (Hanser-Verlag, München 1995) und - ergänzend - Carroy et al. in "Chemistry and Technology of UV and EB Formulation for Coatings, Inks and Paints" (Oldring (Hrsg.), 1994, SITA, London).

Ferner weist entweder die erste Funktionsschicht oder die zweite Funktionsschicht ein Anpassungsmittel auf. Dieses ist ebenfalls flächenförmig ausgestaltet und weist parallel zu seiner Hauptausdehnung zwei Seitenflächen auf, eine erste Seitenfläche und eine zweite Seitenfläche.

Als Anpassungsmittel wird vorliegend jedes Mittel verstanden, das angepasst und geeignet ist, gezielt einzelne optische Eigenschaften des gesamten Flächenelements zu beeinflussen. Dazu ermöglicht das Anpassungsmittel ein Angleichen der gewählten optischen Eigenschaft eines ersten Materials, das an die erste Seitenfläche des Anpassungsmittels angrenzt, an die entsprechende optische Eigenschaft eines zweiten Materials, das an die zweite Seitenfläche des Anpassungsmittels angrenzt, wodurch die beiden an das Anpassungsmittel angrenzenden Materialien aneinander angepasst werden.

Wird als die durch das Anpassungsmittel anzupassende optische Eigenschaft beispielsweise die Absorption gewählt, so kann das Anpassungsmittel als Intensitätsverlaufmittel oder als Farbverlaufsmittel ausgebildet sein. Handelt es sich bei der optischen Eigenschaft etwa um den Brechungsindex, so kann das Anpassungsmittel zum Beispiel als Antireflexionsmittel ausgebildet sein.

Als Antireflexionsmittel wird jegliches Mittel aufgefasst, das zur Verringerung der an einer Grenzfläche auftretenden Reflexion eingesetzt werden kann. Wie obenstehend ausgeführt kann das Prinzip eines derartigen Antireflexionsmittels auf einer Anpassung der Brechungsindices der die Grenzfläche ausbildenden Materialien beruhen. Vorliegend wird das Antireflexionsmittel dazu verwendet, den Anteil des an der Außenseite des erfindungsgemäßen Flächenelements reflektierten sichtbaren Lichts zu vermindern.

Ein derartiges Antireflexionsmittel kann dabei jede beliebige geometrische Form aufweisen, regelmäßige wie unregelmäßige. Als Antireflexionsbeschichtung wird ein flächenförmiges Antireflexionsmittel bezeichnet, dessen Nebenausdehnung - die Schichtdicke - um ein Vielfaches kleiner ist als dessen Hauptausdehnung - die lateralen Abmessungen - und das senkrecht zur Nebenausdehnung und parallel zur Hauptausdehnung vorzugsweise chemisch homogen aufgebaut ist.

Wie zuvor beschrieben, kann dies etwa durch Verwendung eines Antireflexionsmittels aus einem Material erreicht werden, dessen Brechungsindex zwischen denen der umgebenden Phasen liegt. Wird das Anpassungsmittel in der ersten Funktionsschicht verwendet, so sind diese beiden Phasen der Träger der zweiten Funktionsschicht und die das Flächenelement umgebende Luft (oder - je nach der zu erzielenden Endanordnung im Anzeigesystem - eine zweite Klebemasse zum Verkleben des Verbundsystems an der Außenseite der Anzeigeeinrichtung). Wird das Anpassungsmittel hingegen als zweite Funktionsschicht verwendet, so sind die beiden Phasen die Klebemassenschichtung und der Träger der ersten Funktionsschicht.

Als Material des Antireflexionsmittels können alle hinsichtlich ihrer Brechungsindices und Hafteigenschaften geeigneten Materialien und Materialkombinationen eingesetzt werden. Dabei können das Anpassungsmittel und somit auch das Antireflexionsmittel einlagig oder mehrlagig aufgebaut sein.

Im Folgenden sind zunächst einige Beispiele für Antireflexionsmittel als erste Funktionsschicht aufgezählt, ohne durch diese Aufzählung die Auswahl einzuschränken. So können als einlagiges Antireflexionsmittel etwa Schichten aus anorganischen oder aus organischen Materialien eingesetzt werden. Eine derartige anorganische Schicht kann etwa Magnesiumfluorid ($MgF_2$) mit einem Brechungsindex $n_d$ von 1,35 bei Licht einer Wellenlänge von 550 nm enthalten. Ebenfalls geeignet sind Schichten aus anderen Oxiden, etwa aus Siliziumdioxid ($SiO_2$) oder Siliziummonoxid (SiO), sowie Metalloxide, beispielsweise Titandioxid ($TiO_2$) Hafniumoxid ($HfO_2$) Magnesiumoxid (MgO), Zirkondioxid ($ZrO_2$) oder Tantaloxid ($Ta_2O_5$). Abgesehen von diesen Oxiden können auch andere Materialien eingesetzt werden, beispielsweise Nitride wie etwa Siliziumnitrid ($SiN_x$).

Organische Schichten können beispielsweise Schichten aus Polymeren mit niedrigem Brechungsindex sein, etwa fluorierten Polymeren. Diese können auch in Kombination mit den zuvor genannten anorganischen Materialien eingesetzt werden, entweder als Mischungen oder als mehrlagige Systeme. Als Beispiel für mehrlagige Systeme dienen etwa Mehrschichtsysteme, neben fluorierten Polymeren Schichten aus Siliziumdioxid und/oder Titandioxid umfassen.

Als Antireflexionsbeschichtung können des Weiteren auch Materialien dienen, die in einem Sol-Gel-Verfahren

aus üblichen Ausgangsstoffen wie etwa Silikonen, Nichtmetallalkoxiden oder Metallalkoxiden sowie aus Mischungen dieser Substanzen erhalten wurden. Somit können etwa auch Antireflexionsbeschichtungen auf der Grundlage von Siloxanen hergestellt werden.

Typische Schichtdicken bei Schichten aus derartigen Anpassungsmitteln liegen im Bereich von 0,2 nm bis 100 nm, bevorzugt im Bereich von 10 nm bis und 50 nm. Für einzelne Systeme, etwa eine Siloxan-basierende Beschichtung aus einer Lösung, lassen sich erfindungsgemäß auch Schichtdicken von mehr als 100 nm erzielen, etwa von 500 nm. Es ist darauf zu achten dass je nach Schichtdicke und chemischer Zusammensetzung der einzelnen Schichten oder mehrerer Schichten in einem mehrlagigen System aufgrund von zusätzlichen Interferenzprozessen Farbveränderungen auftreten können.

Andere Anpassungsmittel können ihre Funktionalität durch die Erzeugung von besonderen Oberflächenstrukturen erhalten. Dies betrifft etwa poröse Beschichtungen oder Schichten mit stochastischen oder periodischen Oberflächenstrukturen als Antireflexionsbeschichtungen, wobei der Abstand zwischen den Strukturen jeweils kleiner ist als die Wellenlänge des sichtbaren Lichtes.

Bei einem inversen Aufbau des Flächenelements, in dem das Anpassungsmittel als zweite Funktionsschicht vorliegt, können ebenfalls alle geeigneten Materialien als Anpassungsmittel eingesetzt werden, deren Brechungsindex den Spezifikationen genügt und die zugleich eine hinreichende Klebekraft sowohl auf der Klebeschichtung als auch auf dem Träger der ersten Funktionsschicht aufweisen. Bei Verwendung von monoaxial orientiertem Polypropylen (MOPP) als Träger kann beispielsweise als Antireflexionsbeschichtung eine Schicht aus Polymethylmethacrylat (PMMA) verwendet werden.

Die vorgenannten Anpassungsmittel können über geeignete Verfahren auf den Träger oder die Klebemasseschichtung aufgetragen werden, etwa mittels einer Lösungsmittelbeschichtung, mittels Vakuumabscheidungsverfahren wie beispielsweise eine chemische Gasphasenabscheidung (Chemical Vapor Deposition; CVD) oder eine plasmaionenunterstützte Abscheidung (Plasma-Ion assisted Deposition; PIAD) oder auch - für den Fall, dass beide Funktionsschichten Folienmaterialien sind, etwa bei der Kombination aus MOPP und PMMA - mittels Coextrusion.

Erfindungsgemäß kann entweder die erste oder die zweite Funktionsschicht als Anpassungsmittel ausgebildet sein. Ist die erste Funktionsschicht als Anpassungsmittel ausgebildet, so ist die zweite Funktionsschicht ein Träger. In diesem Fall ergibt sich ein Aufbau, in dem das Anpassungsmittel an der Außenseite des Flächenelements angeordnet ist. Dies ist etwa dann besonders sinnvoll, wenn das Anpassungsmittel mechanisch besonders belastbar ausgebildet ist, etwa eine hohe Ritzfestigkeit aufweist, da so das Flächenelement zusätzlich vor einer mechanischen Beschädigung infolge äußerer Einwirkung geschützt ist. Ebenso ist aber auch der umgekehrte Aufbau möglich, in dem die erste Funktionsschicht als Träger und die zweite Funktionsschicht als Anpassungsmittel ausgebildet ist, so dass das Anpassungsmittel nicht an der Außenseite des Flächenelements angeordnet ist. Dieser inverse Aufbau ist etwa bei Verwendung von Trägermaterialien mit besonders niedrigem Brechungsindex sinnvoll.

Dabei kann also zumindest eine der beiden zu der Hauptausdehnung parallelen Seitenflächen der ersten Funktionsschicht stabil gegenüber mechanischer Beanspruchung ausgebildet sein. Dies beinhaltet eine Vielzahl an unterschiedlichen Ausbildungen. So kann zum einen das Material der ersten Funktionsschicht derart gewählt werden, dass es mechanisch stabil ist. Dies kann neben der Wahl eines geeigneten Polymers mit entsprechender Reißfestigkeit auch die Auswahl einer mehrlagigen ersten Funktionsschicht umfassen, bei dem eine oder mehrere Lagen zusätzlich strukturverstärkend ausgebildet sind, etwa als aufgetragener Lack, als Gewebe oder dergleichen. Strukturverstärkende Elemente können ebenfalls in das Material der ersten Funktionsschicht eingebettet vorliegen, etwa in Form von Fasern.

Bevorzugt kann das Flächenelement vor der Verklebung auf einem Durchsichtelement auch einen temporären Träger umfassen. Dieser temporäre Träger ist an der Seite der Klebeschichtung angeordnet, die der mit der ersten Seitenfläche der zweiten Funktionsschicht verbundene Oberfläche der Klebeschichtung gegenüber liegt, und dabei mit der Klebeschichtung rückstandsfrei ablösbar verbunden. Dieser temporäre Träger dient hierbei dem Schutz der offenen liegenden unverklebten Klebemasse gegenüber unbeabsichtigter Verklebung sowie gegenüber Staub und sollte zudem eine hochglatte Oberfläche aufweisen, so dass die Klebeschichtung hierdurch keine einseitige Strukturierung erfährt. Als temporärer Träger eignen sich alle üblichen Trennsysteme, Trennfolien und Trennpapiere, etwa solche aus Glassine oder olefinische Folien wie Polyethylen hoher Dichte (HDPE) oder Polyethylen niedriger Dichte (LDPE), wobei hierfür aufgrund ihrer höchstglatten Oberflächen insbesondere Trennfolien geeignet sind. Zur Verbesserung der Trenneigenschaften können diese temporären Träger zusätzlich ein Haftverminderndes System aufweisen, etwa eine silikonisierte Trennlage oder ein Trennmittel. Hochglatte Oberflächen für temporäre Träger lassen sich durch Verwendung von antiblockmittelfreien PET-Folien in Kombination von aus der Lösung aufgetragenen Silikonsystemen erreichen. Selbstverständlich lassen sich als temporäre Träger auch Folien einsetzen, die einen Brechungsindex $n_d$ von mehr als 1,43 (20 °C) besitzen.

Zur Herstellung und Verarbeitung der verklebbaren Flächenelemente sind staubfreie Bedingungen von größter Bedeutung, da bereits geringe Staubmengen in der Verklebung als Streuzentren für das hindurchtretende Licht dienen und so die Transmission verringern. Vorzugsweise findet die Fertigung und Verarbeitung daher unter Reinraumbedingungen statt, nach Möglichkeit sogar in einem Reinstraum.

Bei der Herstellung wird nach Möglichkeit zunächst die Klebeschichtung in einem ersten Beschichtungsschritt auf eine Trennfolie aufgetragen. Wird dabei aus Lösung beschichtet, so kann die Klebeschichtung nach diesem ersten Beschichtungsschritt von in der Klebemasse verbliebenem Lösungsmittel befreit werden, etwa durch Abdampfen des Lösungsmittels in einem Trockenkanal. Anschließend wird zu der auf die Trennfolie aufgebrachten Klebeschichtung das Material der zweiten Funktionsschicht aufgetragen, etwa aus der Schmelze, aus der Lösung oder als Folie, die dann über eine Kaschierwalze zukaschiert wird. Letzteres geschieht vorteilhafterweise unter Druck, wobei anstelle dessen oder auch zusätzlich das System erhitzt werden kann. Temperatur und Anpressdruck der Kaschierwalze können dabei je nach Aktivierungstemperatur und Fließverhalten der eingesetzten Klebemasse variieren. Abschließend wird das Material der ersten Funktionsschicht entsprechend aufgetragen.

Aus apparativen Gründen ist jedoch die Herstellung der Klebeschichtung aus der Lösung bevorzugt, da hierbei niedrigere Verarbeitungstemperaturen gewählt werden können, wodurch die Ausbildung von kristallinen oder teilkristallinen Bereichen in der Klebemasse beim Auftragen und somit auch eine Abnahme der Transparenz infolge der kristallinen Streuzentren vermieden werden kann. Hierzu wird die Klebemasse in einem geeigneten Lösemittel gelöst und gleichmäßig auf den Träger aufgetragen, beispielsweise mit Hilfe eines Rakels oder einer Auftragdüse. Eine Auftragung aus der Lösung bietet zudem den Vorteil, dass sich so Klebeschichtungen mit hochglatten Oberflächen erzeugen lassen, die Verbindungen mit einer hohen Transparenz ermöglichen.

Unabhängig vom eingesetzten Verfahren werden alle Lösungen und Schmelzen vor dem Auftragen gefiltert, um Staub und andere feste Beimengungen wie etwa Polymerkristallite zu entfernen und so den Anteil an Streuzentren in der Klebemasse gering zu halten.

Ein so erhaltenes Flächenelement weist in der Verklebung üblicherweise eine Dicke aus einem Bereich von 5 bis 300 $\mu$m auf, insbesondere aus einem Bereich von 10 bis 50 $\mu$m. Vorzugsweise beträgt der Klebemassenauftrag dabei zwischen 10 und 150 g/$m^2$, besonders bevorzugt zwischen 20 und 100 g/$m^2$.

Aus dem so erhaltenen Flächenelement wird nun ein Stanzling in der gewünschten Form geschnitten oder gestanzt; in der Regel erfolgt zu diesem Zeitpunkt lediglich ein Schneiden auf Nutzbreite.

Ein derartiges Flächenelement lässt sich erfindungsgemäß als Splittersicherungseinrichtung verwenden, etwa zur Sicherung von Anzeigen in Konsumgüterelektronikbauteilen. Als Splittersicherungseinrichtung wird jede Einrichtung aufgefasst, die geeignet und angepasst ist, bei einer äußeren Krafteinwirkung auf einen zu schützenden Körper dessen Zersplittern bestmöglich zu verhindern. Dies kann etwa dadurch erreicht werden, dass weitgehend verhindert wird, dass etwaige Bruchstücke sich vollständig vom Körper ablösen und vereinzelt werden.

Üblicherweise ist es nicht möglich, mit Hilfe einer Splittersicherungseinrichtung einen vollständigen Schutz gegen jegliche Belastung zu erreichen. Jedoch bietet eine solche Sicherungseinrichtung in der Regel zumindest einen gewissen Schutz gegenüber üblichen Belastungen, etwa einen unbeabsichtigten Sturz des Körpers aus Höhen bis zu einigen Metern. Zudem kann es vorkommen, dass trotz Verwendung einer Splittersicherungseinrichtung ein kleiner Teil der beim Bruch entstehenden Splitter sich dennoch ablöst, wobei jedoch die größte Anzahl der Bruchstücke nicht vereinzelt werden, die Bruchstücke werden also zumindest im wesentlichen zusammengehalten. Idealerweise könnte eine Sicherungseinrichtung sogar einen Bruch des Körpers verhindern, etwa über eine strukturelle Verstärkung des Körpers. Eine Splittersicherungseinrichtung ist um so wichtiger, je spröder der Körper ist.

Zur Verwendung als Splittersicherungseinrichtung wird das erfindungsgemäße Flächenelement vollflächig an einem Durchsichtelement befestigt. Bei einer derartigen Befestigung können auch einzelne Teilbereiche der Oberfläche des Durchsichtelements nicht von dem Flächenelement bedeckt sein, wenn beispielsweise diese Teilbereiche innerhalb eines Gehäuses angeordnet sind, so dass eine äußere Kraft auf diese Teilbereiche nicht unmittelbar einwirken kann. Zur Erzielung einer Splittersicherung muss lediglich der von außen zugängliche Teilbereich eines spröden Flächenkörpers des Durchsichtelements von dem Flächenelement vollflächig bedeckt sein.

Als Durchsichtelement wird vorliegend jegliches Element verstanden, das zumindest einen transparenten Teilbereich aufweist, durch den es möglich ist, eine Anzeige zu betrachten. Der transparente Teilbereich des Durchsichtelements kann hierbei aus allen üblichen Materialien gefertigt sein und besteht idealerweise aus Glas. Der Teilbereich aus Glas ist dabei als spröder Flächenkörper für das Verbinden mit dem Flächenelement angepasst. Die Anpassung kann alle übliche geeigneten Maßnahmen umfassen; im einfachsten Fall ist die Oberfläche des Teilbereichs zumindest im wesentlichen glatt ausgebildet, so dass ein dauerhaftes Verbinden mit der Klebeschichtung des Flächenelements über diesen Teilbereich möglich ist. Darüber hinaus kann eine solche Anpassung grundsätzlich auch weitere Maßnahmen umfassen, etwa ein Beschichten der Glasoberfläche mit einem haftungsvermittelnden Lack. Als dauerhafte Verbindung wird dabei jegliche Verbindung angesehen, die nicht zu einem Ablösen angepasst ist; dies kann etwa durch die Verwendung einer geeigneten Klebemasse als Klebeschichtung des Flächenelements erreicht werden.

Neben den transparenten Teilbereichen kann das Durchsichtelement zusätzlich auch nichttransparente Teilbereiche aufweisen. Diese nichttransparenten Teilbereiche können aus demselben Material wie ein transparenter Teilbereich gefertigt sein oder aus anderen Materialien. So können nichttransparente Teilbereiche beispielsweise als Halterungsabschnitt, Gehäuse oder als Rahmen zur Befestigung an anderen Bestandteilen des Geräts ausgebildet sein oder auch nur dekorativen Zwecken dienen, etwa eingefärbte Bereiche. Derartige eingefärbte Bereiche lassen sich etwa

durch in die Oberfläche eingebettete oder auf diese aufgetragene Farbstoffe und Pigmente erhalten, beispielsweise mittels einer Lackbeschichtung und/oder durch lokale Metallisierung der Oberfläche.

Demzufolge ist die Splittersicherungseinrichtung als Klebeverbund ausgebildet, der das Durchsichtelement und das Flächenelement umfasst. Darüber hinaus kann der Klebeverbund auch noch weitere Elemente aufweisen, zum Beispiel Halterahmenelemente zum Fixieren des Klebeverbunds an einem Gehäuseteil.

Der Klebeverbund wird erfindungsgemäß als Beschädigungsschutzvorrichtung für eine Anzeigeeinrichtung verwendet. Als Beschädigungsschutzvorrichtung wird jede Vorrichtung verstanden, die geeignet und angepasst ist, die Einschränkung der Funktionalität eines zu schützenden Körpers infolge äußerer einwirkender Kräfte zu verhindern.

Eine Anzeigeeinrichtung ist eine beliebige funktionale Einrichtung, die einen Anzeigebereich umfasst, auf dem bestimmte Informationen angezeigt werden, etwa Messwerte, Betriebszustände, gespeicherte oder empfangene Daten oder dergleichen. Die Anzeige auf dem Anzeigebereich kann dabei beliebig erfolgen, beispielsweise in mechanischer, elektronischer oder sonstiger Weise. So sind in Konsumgüterelektronikgeräten zum Beispiel elektronische Anzeigen auf der Grundlage von Flüssigkristallen, Kathodenröhren oder Leuchtdioden üblich, die in der Regel modular als Anzeigemodule gefertigt werden. Der Anzeigebereich ist zumeist als Anzeigefläche ausgebildet, jedoch sind auch andere Geometrien zu finden, etwa bei holografischen Anzeigen. Neben dem Anzeigebereich kann die Anzeigeeinrichtung auch weitere Elemente umfassen, etwa Rahmen- oder Gehäuseelemente und solche zur Regelung und Steuerung der Anzeigefunktion. Die Anzeigeeinrichtung ist erfindungsgemäß vor einer äußeren mechanischen Einwirkung zu schützen.

Zusammen mit dem Klebeverbund als Beschädigungsschutzvorrichtung bildet die Anzeigeeinrichtung ein Anzeigesystem. Ein Anzeigesystem ist eine funktionale Einheit, die zur Anzeige der Informationen dient. Dabei kann das Anzeigesystem ein untergeordneter Teil eines Geräts sein oder als eigenständiges Gerät ausgebildet sein. Neben dem Klebeverbund und der Anzeigeeinrichtung kann ein erfindungsgemäßes Anzeigesystem weitere Komponenten umfassen.

Innerhalb des Anzeigesystems ist der Klebeverbund derart angeordnet, dass die Seite des Klebeverbunds, an der das Flächenelement angeordnet ist, zu der Seite der Anzeigeeinrichtung hin gewandt ist, die zur Anzeige der anzuzeigenden Informationen angepasst ist, nämlich dem Anzeigebereich. In dieser Anordnung kann der Anzeigebereich vollständig durch den Klebeverbund hindurch betrachtet werden, also durch das Durchsichtelement und durch das Flächenelement.

Grundsätzlich kann das Anzeigesystem sowohl ein System im Endzustand (Auslieferungszustand) sein, so dass es bereits in vollem Umfang funktionstüchtig ist, oder aber ein Zwischenprodukt darstellen, das zunächst noch abschließenden Fertigungsschritten zu unterziehen ist, bevor es den Endzustand erreicht. Die abschließenden Fertigungsschritte können etwa ein Verkapseln des Innenraums des Anzeigesystems umfassen, um ein Eindringen von Staub zu verhindern.

Zusätzlich oder anstelle dessen kann auch ein Verkleben mit Schaumstoffklebebändern vorgesehen sein, wodurch eine zusätzliche mechanische Entkopplung der so verklebten Bauteile erreicht werden kann, die einer weiteren Verbesserung der Schlagunempfindlichkeit dient.

Die Oberseite des Flächenelements des Klebeverbunds und die Oberseite der zur Anzeige von Informationen angepassten Seite der Anzeigeeinrichtung können zueinander beabstandet angeordnet sein, etwa mit Hilfe von Abstandhaltern, Distanzstücken oder infolge der Anordnung des Klebeverbunds und der Anzeigeeinrichtung relativ zueinander innerhalb des Gehäuses. Um eine hinreichende Transparenz der Anzeige selbst zu gewährleisten, sollte der mittlere Abstand, also der über die gesamte Fläche gemittelte Abstand beider Oberflächen zueinander im Endprodukt höchstens 510 $\mu$m betragen, bevorzugt sogar maximal 400 $\mu$m, da ansonsten der Anteil an Reflexionsverlusten zunimmt. Um eine hinreichende mechanische Entkopplung beider Systeme zu erzielen, so dass ein Stoß auf den Klebeverbund nicht unmittelbar auf die Anzeigeeinrichtung übertragen und diese beschädigt wird, sollte der mittlere Abstand außerdem mindestens 40 $\mu$m betragen, bevorzugt sogar 50 $\mu$m.

Ein mögliches Verfahren zum Herstellen eines Anzeigesystems mittels des zuvor beschriebenen Flächenelements sollte unter staubfreien Bedingungen durchgeführt werden, beispielsweise im Reinraum oder Reinstraum. Insgesamt wird in einem ersten Schritt eine blasenfreie Verklebung erhalten, indem das entsprechend der jeweiligen Anwendung geschnittene Flächenelement mit dem spröden Flächenkörper vollflächig dauerhaft verbunden wird. Hierfür können alle üblichen Verklebungstechniken eingesetzt werden, wobei besonders gute Ergebnisse beim Laminieren erhalten werden. Hierzu kann zum Beispiel der temporäre Träger von dem Flächenelement entfernt werden und das Flächenelement mit der offen liegenden Klebemasse an den spröden Flächenkörper laminiert werden. Alternativ können auch gestanzte Flächenelemente als Stanzlinge auf den einzelnen Abschnitten der Durchsichtelemente platziert werden.

Es ist nun möglich, den Klebeverbund zu lagern; eine Lagerung schließt vorliegend alle Schritte ein, die üblicherweise zwischen zwei Verarbeitungsschritten stattfinden, so auch die Aufbewahrung in einem Lager oder den Transport. Darüber hinaus kann es - um eine optimale vollflächige Verklebung des Flächenelements an dem Durchsichtelement zu erzielen - auch von Vorteil sein, nach dem Laminieren den Klebeverbund bei einer erhöhten Temperatur zu lagern, beispielsweise bei 40 °C, um dabei das Auffließverhalten der Klebemasse nutzen und etwaige Lufteinschlüsse aus dem System zu entfernen.

Abschließend wird der Klebeverbund mit der Anzeigeeinrichtung in eine feste Anordnung gebracht, wodurch das Anzeigesystem gebildet wird. Dies kann zum Beispiel dadurch erfolgen, dass der Klebeverbund direkt an der Anzeigeeinrichtung befestigt wird oder dass Klebeverbund und Anzeigeeinrichtung jeweils an Halteelementen befestigt werden, die an demselben Gehäuseteil oder an miteinander verbundenen oder zu verbindenden Gehäuseteilen angeordnet sind.

Weitere Vorteile und Anwendungsmöglichkeiten gehen aus den Ausführungsbeispielen hervor, die anhand der beigefügten Zeichnungen im Folgenden näher beschrieben werden sollen. Dabei zeigt die Figur:

**Fig. 1** eine schematische Darstellung eines Längsschnitts durch ein erfindungsgemäßes Flächenelement gemäß einer ersten Ausführungsform,

**Fig. 2** eine schematische Darstellung eines Längsschnitts durch ein erfindungsgemäßes Flächenelement gemäß einer zweiten Ausführungsform,

**Fig. 3** eine schematische Darstellung eines Längsschnitts durch ein erfindungsgemäßes Flächenelement gemäß einer Abwandlung der ersten Ausführungsform,

**Fig. 4** eine schematische Darstellung eines Längsschnitts durch einen Verbund mit einem Flächenelement in einem ersten Verbundaufbau,

**Fig. 5** eine schematische Darstellung eines Längsschnitts durch einen Verbund mit einem Flächenelement in einem zweiten Verbundaufbau, und

**Fig. 6** eine schematische Darstellung eines Längsschnitts durch einen Verbund mit einem Flächenelement in einem dritten Verbundaufbau.

Die in **Fig. 1** gezeigte erste Aufbauform des Flächenelements weist als zweite Funktionsschicht einen Träger 1 auf, der als Polymerfolie ausgebildet ist, als Klebeschichtung 2 eine Haftklebemasse auf Acrylatbasis, als erste Funktionsschicht ein Anpassungsmittel in Form einer Antireflexionsbeschichtung 3 und als temporären Träger 4 eine silikonisierte Trennfolie. Die Trägerfolie 1 ist auf einer Seitenfläche gleichmäßig vollflächig mit der Haftklebemasse 2 bedeckt. An der anderen Seitenfläche des Trägers 1 ist die Antireflexionsbeschichtung 3 angeordnet. Somit ist die Antireflexionsbeschichtung 3 hier zwischen dem Träger 1 und dem umgebenden Medium angeordnet. Zum Schutz vor Verunreinigung und vor einem ungewollten Verkleben mit der Trennfolie ist die Klebemasse 2 vollflächig mit dem temporären Träger 4 bedeckt.

Die in **Fig. 2** gezeigte zweite Aufbauform des Flächenelements besitzt im Wesentlichen denselben grundsätzlichen Aufbau wie die in **Fig. 1** dargestellte Aufbauform mit dem Unterschied, dass die zweite Funktionsschicht hier als Antireflexionsbeschichtung 3 und die erste Funktionsschicht als Träger 1 ausgebildet sind. Somit ist die Antireflexionsbeschichtung 3 hier zwischen der Haftklebemasse 2 und dem Träger 1 angeordnet (inverser Aufbau).

Die in **Fig. 3** gezeigte Abwandlung der ersten Aufbauform des Flächenelements besitzt im Wesentlichen denselben Aufbau wie die in **Fig. 1** dargestellte erste Aufbauform mit dem Unterschied, dass die Antireflexionsbeschichtung 3 zusätzlich mit einer zweiten Klebemasse 9 bedeckt ist, mittels derer das Flächenelement im späteren Verbund mit dem Durchsichtelement an der Oberfläche einer Anzeigeeinrichtung befestigt wird. Auch diese Klebemasse ist dabei derart gewählt, dass das Flächenelement insgesamt hochtransparent ist.

Die in **Fig. 4** gezeigte erste Aufbauform des Verbundelements mit einem Flächenelement und einer Glasplatte als Durchsichtelement 5 weist als Flächenelement ein Flächenelement mit dem in **Fig. 2** dargestellten inversen Aufbau auf; genauso gut lässt sich ein Flächenelement mit einem anderen Aufbau einsetzen, etwa mit dem in **Fig. 1** dargestellten Aufbau. Bei dem in **Fig. 2** dargestellten Flächenelement wurde die Trennfolie 4 entfernt, um es mittels der Haftklebemasse 2 an der Glasplatte 5 flächig und blasenfrei zu befestigen. In dieser Anordnung bildet der Träger 1 eine Seitenfläche des Verbunds. Um den so erhaltenen Verbund in dem Anzeigesystem befestigen zu können, ist der Verbund mit einem optionalen Befestigungssystem aus einem doppelseitigen Klebeband 6 und einer zweiten Trennfolie 7 als zweiten temporären Träger versehen, das an der Seite der Glasplatte angeordnet ist, die nicht vollflächig von dem Flächenelement bedeckt ist; diese Seite stellt die spätere Außenseite des Anzeigesystems dar. Das doppelseitige Klebeband 6 wird hierbei zum Schutz vor unbeabsichtigter Verklebung von der zweiten Trennfolie 7 bedeckt und ist vorliegend trägerfrei als Transferklebeband ausgebildet, kann aber auch einen Träger aufweisen. Das Befestigungssystem 6, 7 weist eine besondere Form auf, so dass dieses den optischen Sichtweg der Anzeige nicht verdeckt, und ist vorliegend als Stanzling ausgeführt. Mit Hilfe des Befestigungssystems 6, 7 kann der Verbund über dessen Glasplatte 5 in dem Gerät befestigt werden, das das Anzeigesystem enthält. Die Verbindung zu dem als Anzeigeeinrichtung verwendeten LCD-Modul wird hierbei über das Gehäuse des Gerätes geschaffen, an dem sowohl das LCD-Modul als auch der Verbund fixiert sind

(indirekte Verbindung).

Die in **Fig. 5** gezeigte zweite Aufbauform des Verbundelements mit einem Flächenelement und einer Glasplatte als Durchsichtelement 5 weist als Flächenelement ein Flächenelement mit dem in **Fig. 1** dargestellten Aufbau auf; genauso gut lässt sich jedoch auch hier ein Flächenelement mit einem anderen Aufbau einsetzen, etwa mit dem in **Fig. 2** dargestellten inversen Aufbau. Bei dem in **Fig. 1** dargestellten Flächenelement wurde die Trennfolie 4 entfernt, um es mittels der Haftklebemasse 2 an der Glasplatte 5 flächig und blasenfrei zu befestigen. Um den so erhaltenen Verbund in dem Anzeigesystem befestigen zu können, ist der Verbund mit einem optionalen Befestigungssystem aus einem doppelseitigen Klebeband 6 und einer zweiten Trennfolie 7 als zweiten temporären Träger versehen. Im Unterschied zu dem in **Fig. 4** dargestellten Aufbau ist das Befestigungssystem hier jedoch nicht an der späteren Außenseite des Anzeigesystems vorgesehen, sondern an dessen Innenseite. Dazu ist das Klebeband 6 direkt mit der Trägerfolie 1 des Flächenelements verbunden, so dass die Antireflexionsbeschichtung 3 von dem Klebeband 6 in der Flächenanordnung umgeben ist. In dieser Anordnung bedeckt also die Antireflexionsbeschichtung 3 die Trägerfolie 1 nicht vollflächig, sondern nur teilweise. Jedoch auch hier ist das gesamte Sichtfeld des späteren Anzeigesystems von der Antireflexionsbeschichtung 3 bedeckt. Mit Hilfe des Befestigungssystems 6, 7 kann der Verbund über die Rückseite des Verbunds mit dem Gehäuse des Geräts befestigt werden, das das Anzeigesystem enthält. Alternativ ist es bei diesem Aufbau auch möglich, das Verbundsystem direkt an der Außenseite der Anzeigeeinrichtung zu befestigen. In diesem Fall ist es günstig, wenn das Klebeband eine gewisse Formstabilität aufweist, um als Distanzstück oder Abstandhalter zwischen der Oberfläche des Verbunds und der Oberfläche der Anzeigeeinrichtung zu dienen.

Die in **Fig. 6** gezeigte dritte Aufbauform des Verbundelements mit einem Flächenelement und einer Glasplatte als Durchsichtelement 5 weist als Flächenelement ein Flächenelement mit dem in **Fig. 1** dargestellten Aufbau auf; genauso gut lässt sich jedoch auch hier ein Flächenelement mit einem anderen Aufbau einsetzen, etwa mit dem in **Fig. 2** dargestellten inversen Aufbau. Bei dem in **Fig. 1** dargestellten Flächenelement wurde die Trennfolie 4 entfernt, um es mittels der Haftklebemasse 2 an der Glasplatte 5 flächig und blasenfrei zu befestigen. Um den so erhaltenen Verbund in dem Anzeigesystem befestigen zu können, ist der Verbund mit einem optionalen Befestigungssystem aus einem doppelseitigen Klebeband 8 und einer zweiten Trennfolie 7 als zweiten temporären Träger versehen. Ebenso wie bei dem in **Fig. 5** dargestellten Aufbau ist an der Seite des Verbunds das Befestigungssystem 7, 8 vorgesehen, die später zur Innenseite des Anzeigesystems wird. Im Unterschied zu dem in **Fig. 5** dargestellten Aufbau ist das Befestigungssystem jedoch nicht an der Trägerfolie 1, sondern direkt über an Glasplatte 5 befestigt. Demzufolge ist in dieser Anordnung das gesamte Flächenelement von dem Befestigungssystem 8 in der Flächenanordnung umgeben, so dass die Antireflexionsbeschichtung 3 die Trägerfolie 1 zwar vollflächig bedeckt, das Flächenelement die Glasplatte 5 hingegen nur teilweise. Mit Hilfe des Befestigungssystems 7, 8 kann der Verbund mit seiner Rückseite an dem Gehäuse des Geräts befestigt werden, das das Anzeigesystem enthält. Das Klebeband 8 ist hier als Schaumstoffklebeband ausgebildet und schließt in der Höhe nicht bündig mit dem Träger 1 ab. Hierdurch ist es möglich, den Verbund direkt an der Anzeigeeinrichtung zu fixieren, wobei durch Verwendung des Schaumstoffklebebandes die Oberflächen des Trägers und der Anzeigeeinrichtung voneinander beabstandet sind und gleichzeitig eine Entkopplung bewirkt wird. Anstelle dessen kann dieser Verbund auch an einem Gehäuserahmen befestigt werde.

Untersuchungen zur Transparenz und Verklebungsfestigkeit von Flächenelementen wurden an sechs unterschiedlichen Systemen durchgeführt. Zur Herstellung dieser sechs unterschiedlichen Flächenelementsysteme wurde eine von drei untersuchten Klebemassen - Polymer 1, 2 und 3 - auf einem von drei Trägern - Träger A, Träger B und Träger C - aufgetragen.

Für die Polymerisation von Polymer 1 wurde ein für radikalische Polymerisationen üblicher 2 L-Glasreaktor mit 32 g Acrylsäure, 168 g n-Butylacrylat, 200 g 2-Ethylhexylacrylat in 300 g eines Gemisches aus Aceton und 2-Propanol im Verhältnis 97:3 befüllt, wobei die Monomere vor der Reaktion in einem Reinigungsschritt von etwaigen Stabilisatorbeimengungen befreit worden waren. Durch fünfundvierzigminütiges Hindurchleiten von Stickstoff wurde die Reaktionsmischung von gelösten Gasen befreit. Zum Initiieren der Reaktion wurde die Reaktionsmischung auf eine Temperatur von 58 °C erhitzt und bei dieser Temperatur mit 0,2 g 2,2'-Azobis(2-methylbutyronitril) (Vazo 67® der Firma DuPont) versetzt. Nach der Zugabe wurde das den Reaktor umgebende Heizbad auf eine Temperatur von 75 °C erwärmt und die Reaktion konstant bei der sich daraufhin im Reaktor einstellenden Temperatur durchgeführt. Nach einer Reaktionsdauer von 1 h wurden der Reaktionsmischung erneut 0,2 g 2,2'-Azobis(2-methylbutyronitril) (Vazo 67® der Firma DuPont) hinzugefügt. Nach jeweils 3 h und 6 h wurde die Reaktionsmischung mit jeweils 150 g des Gemisches aus Aceton und 2-Propanol verdünnt. Zur Reduktion der in der Reaktionslösung verbliebenen Reste an Initiator wurden nach 8 h und nach 10 h jeweils 0,4 g Di(4-tert-butylcyclohexyl)peroxydicarbonat (Perkadox 16® der Fa. Akzo Nobel) in den Reaktor eingebracht. Nach einer Reaktionszeit von insgesamt 22 h wurde die Reaktion durch Abkühlen des Reaktors auf Raumtemperatur abgebrochen.

Die Polymerisation von Polymer 2 wurde genau so wie für Polymer 1 beschrieben durchgeführt, wobei als Unterschied zu der Synthese von Polymer 1 die Reaktionsmischung anstelle von 32 g Acrylsäure und 168 g n-Butylacrylat jeweils 20 g Acrylsäure, 40 g Methylacrylat und 140 g n-Butylacrylat enthielt (auch diese Monomere waren vor der Reaktion von Stabilisatorbeimengungen befreit worden).

Die so erhaltenen Lösungen der Polymere 1 und 2 wurden unter Rühren mit jeweils 0,3 Gew.-% Aluminium (III)acetylacetonat vermischt und die entstandene Mischung mit Aceton auf einen Feststoffgehalt von 30 % verdünnt.

Für die Polymerisation eines Blockcopolymers (Polymer 3) wurde eine Mischung aus einem Nitroxid und einem Alkoxyamin eingesetzt. Als Nitroxid wurde 2,2,5-Trimethyl-4-phenyl-3-azahexan-3-nitroxid (siehe untenstehende Struktur) eingesetzt, das gemäß einer Literaturvorschrift hergestellt worden war (Journal of American Chemical Society, 1999, 121 (16), 3904).

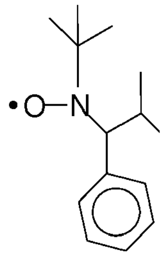

Als Alkoxyamin wurde ein difunktionelles Alkoxyamin verwendet, das analog zu einer aus der Literatur bekannten Synthesevorschrift hergestellt worden war (Journal of American Chemical Society, 1999, 121(16), 3904). Hierbei wurden als Ausgangsstoffe 1,4-Divinylbenzol und das zuvor beschriebene Nitroxid eingesetzt. Das resultierende Alkoxyamin besaß die folgende Struktur:

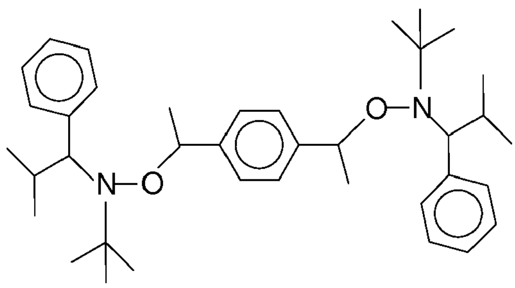

Zur Herstellung von Polymer 3 wurden 0,739 g des difunktionellen Alkoxyamins und 0,0287 g des freien Nitroxids in einem Molverhältnis von 10:1 als Initiatoren eingesetzt. Diese wurden mit einer Mischung aus 128 g destilliertem Isobornylacrylat und 192 g destilliertem 2-Ethylhexylacrylat gemischt, die den oben beschriebenen Monomeren B des späteren Polymerblocks P(B) entsprechen. Die Reaktionsmischung wurde unter wiederholtem Herunterkühlen auf eine Temperatur von -78 °C entgast und anschließend in einem geschlossenen Druckreaktor unter Druck auf eine Temperatur von 110°C erhitzt. Nach einer Reaktionsdauer von 36 h wurde der Reaktionsmischung als weiteres Monomer 180 g destilliertes o-Methoxystyrol hinzugefügt, das dem oben beschriebenen Monomer A des späteren Polymerblocks P(A) entspricht, und die Reaktionsmischung wurde für weitere 24 h auf dieser Temperatur gehalten.

Zur Beendigung der Reaktion, Isolierung und Aufarbeitung des Reaktionsproduktes wurde die Reaktionsmischung auf Raumtemperatur abgekühlt, das entstandene Blockcopolymer in 750 ml Dichlormethan gelöst und anschließend bei einer Temperatur von - 78 °C in 6,0 L Methanol unter starkem Rühren gefällt. Der Niederschlag wurde vom Überstand mittels einer gekühlten Glasfritte abgetrennt.

Das erhaltene Produkt wurde für die Dauer von 12h im Vakuumtrockenschrank bei 10 Torr und 45 °C aufkonzentriert. Der Brechungsindex $n_d$ der Klebemasse wurde in einem standardisierten Verfahren in einem Abbe-Refraktometer der Firma Krüss Optronic GmbH unter Verwendung von Licht einer Wellenlänge von 550 nm ± 150 nm für einen Klebemassenfilm mit einer Dicke von 25 µm bestimmt. Zur Temperierung der Messzelle auf 25 °C wurde diese zusammen mit einem Thermostaten der Firma Lauda betrieben. Der Brechungsindex der Klebemasse ergab sich hierbei zu 1,525. Zur Beschichtung von Trägerfolien wurde eine Lösung des Reaktionsprodukts in Toluol eingesetzt.

Als Träger A wurde eine PET-Folie des Typs Reflex LT2 der Firma Cadillac Plastic mit einer Stärke von 125 µm eingesetzt. Die Folie wurde auf der Seitenfläche mit einer der Polymermassen beschichtet, die jeweils nicht mit antireflexiv eingerichtet war.

Als Träger B wurde eine PET-Folie des Typs NCARC7 der Firma CP Films mit einer Stärke von 125 µm

eingesetzt. Die Folie wurde auf der Seitenfläche mit einer der Polymermassen beschichtet, die jeweils nicht mit antireflexiv eingerichtet war.

Als Träger C wurde eine PET-Folie des Typs Lumirror™ T60 der Firma Toray mit einer Stärke von 50 μm eingesetzt. Als Antireflexionsmittel wurde die Folie einseitig mit einer Sol-Gel-Lösung beschichtet und bei Temperaturen zwischen 50 °C und 100 °C unter Verwendung eines Temperaturverlaufs mit einem Temperaturgradienten getrocknet.

Die zur Beschichtung eingesetzte Sol-Gel-Lösung wurde in einem Sol-Gel-Verfahren erhalten. Dazu wurden in einem luftdicht verschlossenen Gefäß, das einen mit Wasser gekühlten Kühlaufsatz aufwies, mittels eines Rührwerks 122 ml Ethanol, 122 ml Tetraethoxysilan, 0,4 ml 1 M Salzsäure und 9,6 ml entsalztes Wasser für eine Dauer von 90 min bei einer Temperatur von 60 °C unter Rühren vermischt und die Reaktionsmischung anschließend auf eine Temperatur von 40 °C abgekühlt. Zu dieser Mischung wurde eine Lösung von 17,4 g Aluminium-sec-butoxid in 18 ml 2-Propanol hinzu gegeben und die entstandene Reaktionsmischung für eine Dauer von 10 min gerührt. Nach Zugabe von 10 ml entsalztem Wasser wurde die Mischung bei einer Temperatur von 40 °C für weitere 10 min unter Rühren durchmischt. Nun wurden der Reaktionsmischung 26,9 ml Trimethylborat hinzu gegeben und die Mischung für einen Zeitraum von 1 h bei einer Temperatur von 40 °C gerührt. Nach Abkühlen der Reaktionsmischung auf 25 °C wurden nacheinander 25,8 ml Wasser, 8 ml konzentrierte Essigsäure, weitere 25,8 ml Wasser, 10,8 ml einer 1 M Bariumacetatlösung hinzugeben und die Mischung für eine Dauer von 15 min bei einer Temperatur von 25 °C gerührt. Ein Teil der entstandenen Suspension wurde unter Ausschluss von Luftsauerstoff mit dem vierfachen Volumen absoluten Ethanol verdünnt. Die so verdünnte transparente Suspension wurde anschließend bei einer Temperatur 50 °C für 3 Wochen gelagert, um so den Ablauf equilibrierender Alterungsprozesse zu ermöglichen. Die dabei entstandene Sol-Gel-Lösung wurde im Ultraschallbad aufgerührt und verflüssigt, mit Ethanol verdünnt und für die Beschichtung der PET-Folie von Träger C mittels eines Rakels eingesetzt. Die PET-Folie wurde anschließend mit der Polymermasse auf derjenigen Seitenfläche beschichtet, die nicht mit der Sol-Gel-Lösung beschichtet war.

Zur Herstellung der Proben wurde jeweils ein Polymer auf die nicht bedeckte Seite eines Trägers mittels eines Streichbalkens aus der Lösung aufgetragen und das Lösungsmittel anschließend verdampft. Das so erhaltene Flächenelement wurde für 10 min bei einer Temperatur von 120 °C getrocknet. Der nach dem Trocknen erzielte Masseauftrag betrug 100 g/m$^2$.

Für Probe 1 A wurde Polymer 1 auf Träger A aufgetragen, für Probe 1 B Polymer 1 auf Träger B, für Probe 2A Polymer 2 auf Träger A, für Probe 2B Polymer 2 auf Träger B, für Probe 3C Polymer 3 auf Träger C und für Probe 3B Polymer 3 auf Träger B.

Im Folgenden sind zunächst einige Untersuchungen solcher Eigenschaften beschreiben, die die grundsätzliche Eignung der Proben als optisch transparente Splittersicherungseinrichtung betreffen. Anschließend wird auf weitere Versuche Bezug genommen, aus denen sich eine zusätzliche Wirkung des erfindungsgemäßen Flächenelements erkennen lässt.

Die Klebkraft der Proben auf einem Glassubstrat (Schälfestigkeit) wurde in mit einem Verfahren gemäß PSTC 1 bestimmt. Hierzu wurde ein Streifen des Flächenelements mit einer Breite von 2 cm derart auf eine Glasplatte aufgebracht, dass lediglich ein freier Endabschnitt des Streifens nicht mit der Oberfläche der Glasplatte in Kontakt stand. Der mit dem Glassubstrat in Kontakt stehende Bereich des Klebestreifens wurde mit Hilfe einer Rolle mit einer Masse von mit einer 2 kg an das Glassubstrat durch dreimaliges Überrollen definiert angepresst, wobei jedes Überrollen zwei jeweils in gegenläufigen Vorschubrichtungen belastende Rollendurchgänge umfasste.

Zur eigentlichen Messung der Klebkraft wurde die Glasplatte mit dem derart befestigten Flächenelement ortsfest fixiert. Das Flächenelement wurde mit seinem freien Ende an einer Zugprüfmaschine befestigt und 10 min nach dem Verkleben (Messung der Sofortklebkraft) mittels der Zugprüfmaschine unter einem Schälwinkel von 180 ° mit einer Vorschubgeschwindigkeit von 300 mm/min abgezogen. Die maximale Kraft, bei der noch kein Lösen der Verklebung beobachtet wurde, entspricht der Klebkraft auf dem entsprechenden Haftgrund; diese ist in N/cm angegeben.

Die Ergebnisse sind untenstehend in Tabelle 1 wiedergegeben.

Tabelle 1

| Probe | Klebkraft auf Glas [N/cm] |
|---|---|
| 1A | 8,0 |
| 1B | 7,6 |
| 2A | 8,9 |
| 2B | 8,6 |
| 3C | 6,1 |
| 3B | 5,2 |

Aus Tabelle 1 ist ersichtlich, dass alle Proben eine hohe Klebkraft auf dem Glassubstrat aufwiesen. Infolge dieser guten Haftung sind somit alle Proben für Verklebungen auf Glas geeignet.

Zur weiteren Untersuchung wurden die Proben mit Hilfe einer Gummiwalze auf eine Glasscheibe vom Typ D 263 T (Borosilikatglas von 1,1 mm Stärke der Firma Schott mit einem Brechungsindex $n_d$ von 1,5231) blasenfrei aufgebracht. Der Andruck der Proben an das Glassubstrat erfolgte für eine Dauer von 10 s mit einem Anpressdruck von 40 $N/cm^2$.

Zur Überprüfung der Eignung der Probe als Splittersicherungseinrichtung wurde der Verbund aus Probe und Glassubstrat einem Kugelfalltest unterzogen. Hierzu wurde ein Abschnitt der jeweiligen Probe mit einer Breite von 4 cm und einer Länge von 6 cm auf einer Verklebungsfläche wie vorstehend beschrieben blasenfrei befestigt. Der Verbund wurde für eine Dauer von 48 h bei einer Umgebungstemperatur von 23 °C und einer relativen Luftfeuchtigkeit von 50 % zum Equilibrieren der Proben gelagert. Zur Durchführung des eigentlichen Tests wurde die Masse des Verbunds gravimetrisch bestimmt und der Verbund danach in einer Aufnahme derart fixiert, dass jeweils die Seitenfläche mit der Glasseite nach oben und die Seitenfläche mit der Probe nach unten horizontal ausgerichtet war. In einem Abstand von 1 m oberhalb des Verbunds wurde eine Stahlkugel mit einer Masse von 63,7 g zunächst fixiert und schließlich mittels einer Auslöseapparatur freigesetzt. Nach einer Fallhöhe von 1 m traf die Stahlkugel auf die Glasseite des Verbunds auf. Nach dem Aufprall wurde die Masse des Verbunds erneut mittels einer Waage bestimmt. Der Kugelfalltest galt als bestanden (und die Probe somit als Splittersicherungseinrichtung geeignet), wenn die Massedifferenz der Probe vor und nach dem Aufprall der Kugel jeweils weniger als 5 Gew.-% betrug (bezogen auf die Gesamtmasse des Glases), so dass sich insgesamt nur wenige der beim Aufprall der Kugel auf den Verbund entstandenen Glassplitter aus dem Verbund und aus der Verklebung gelöst hatten.

Die Ergebnisse des Kugelfalltests sind untenstehend in Tabelle 2 wiedergegeben.

Tabelle 2

| Probe | Massendifferenz [Gew.-% der Glasmasse] |
|---|---|
| 1A | < 2 |
| 1B | <2 |
| 2A | < 2 |
| 2B | < 2 |
| 3C | < 2 |
| 3B | < 2 |

Tabelle 2 ist zu entnehmen, dass in sämtlichen Proben beim Aufprall der Stahlkugel nur wenige Splitter aus der Verklebung heraus gelangten, so dass alle Proben eine gute Splittersicherung bieten.

Die Transmission der Proben wurde in einem Verfahren gemäß ASTM D1003 für Licht einer Wellenlänge von 550 nm bestimmt. Auch hierbei wurden die Proben jeweils in dem zuvor beschriebenen Verbund aus dem Flächenelement und der Glasplatte untersucht.

Die Ergebnisse der Transmissionsmessung sind untenstehend in Tabelle 3 wiedergegeben.

Tabelle 3

| Probe | Transmission [%] |
|---|---|
| 1A | 91 |
| 1B | 94 |
| 2A | 91 |
| 2B | 94 |
| 3C | 88 |
| 3B | 90 |

Tabelle 3 ist zu entnehmen, dass alle Proben eine Transmission von mehr als 85 % aufwiesen und somit

optisch hochtransparent waren.

Zur Untersuchung der Eignung des Flächenelements unter Dauerbeleuchtung wurde die Lichtbeständigkeit der Proben in dem oben beschriebenen Verbund mit einer Glasplatte untersucht. Hierfür wurde der zuvor beschriebene Verbund von einer Größe von 4 cm x 20 cm zur Hälfte mit einer lichtundurchlässigen Blende aus Pappe abgedeckt. Der derart halb abgedeckte Verbund wurde für eine Dauer von 300 h in einer Beleuchtungsapparatur einer Bestrahlung mit polychromatischem Licht einer intensiven Glühlampe (Osram Ultra Vitalux; 300 W, jeweils in einem Abstand von 50 cm zur Probe angeordnet) unterzogen, die die Einwirkung des Lichts einer Display-Hintergrundbeleuchtung auf die Probe simulieren sollte. Nach Beendigung der Lichtexposition wurde die Blende entfernt und der visuelle Eindruck der beleuchteten Teilfläche mit dem der unbestrahlten Teilfläche qualitativ verglichen, wobei insbesondere auf etwaige Verfärbungen geachtet wurde. Die Probe galt als lichtbeständig, wenn keine Verfärbung infolge der Beleuchtung beobachtet wurde.

Die Ergebnisse des Lichtbeständigkeitstests sind untenstehend in Tabelle 4 wiedergegeben.

Tabelle 4

| Probe | Lichtbeständigkeit |
|---|---|
| 1A | Bestanden |
| 1B | Bestanden |
| 2A | Bestanden |
| 2B | Bestanden |
| 3C | Bestanden |
| 3B | Bestanden |

Wie aus Tabelle 4 erkennbar ist, waren alle Proben gut lichtbeständig und wiesen hohe Alterungsstabilitäten auf. Insbesondere traten keine Verfärbungen auf, die den Strahlengang des transmittierten Lichtes beeinträchtigen könnten und dadurch etwa geometrische Verzerrungen oder farbliche Änderungen hervorrufen könnten. Demzufolge sind sämtliche Proben auch für Langzeitanwendungen geeignet.

Obenstehende Versuche zeigen, dass sämtliche Proben grundsätzlich als optisch transparente Splittersicherungseinrichtung unter realen Bedingungen geeignet sind.

Zusätzlich zu der vorstehend beschriebenen Transmissionsmessung wurde die Eignung des erfindungsgemäßen Flächenelements als Schutzfolie auf einem Anzeigenfeld auch unter realen Bedingungen untersucht, nämlich an einer Flüssigkristallanzeigeeinrichtung mit rechteckiger Anzeigefläche mit einer Sichtfelddiagonalen von etwa 5 cm (2,5 inch-LCD Display). Dazu wurden an den vier Seitenrändern der Flüssigkristallanzeigeeinrichtung jeweils ein Streifen eines doppelseitigen Klebebands von 2 mm Breite als Fixierhilfe und Abstandhalter für den Klebeverbund befestigt. Hierbei wurden die folgenden doppelseitigen Haftklebebänder eingesetzt: tesa® 4972 (Dicke: 48 $\mu$m), tesa® 4982 (Dicke: 100 $\mu$m), tesa® 4965 (Dicke: 205 $\mu$m), Mitsubishi RN (eine PET-Folie einer Dicke von 250 $\mu$m, deren Vorderseite und Rückseite jeweils mit einer weiteren Folie - tesa® 4982 - laminiert war; Gesamtdicke: 450 $\mu$m) und tesa® 4952 (Dicke: 1150 $\mu$m).

An einer Platte aus Borosilikatglas wurden - wie oben beschrieben - Proben des erfindungsgemäßen Flächenelements befestigt, die mit Träger B als Folienträger ausgerüstet waren, also Probe 1 B, Probe 2B und Probe 3B. Der so erhaltene Verbund wurde mit der Trägerfolie der Flächenelemente an der Flüssigkristallanzeigeeinrichtung jeweils mittels der frei liegenden Klebemassen der doppelseitigen Klebebänder an den Seitenrändern der Flüssigkristallanzeigeeinrichtung verklebt, so dass sich je nach dem gewählten doppelseitigen Klebeband ein unterschiedlicher Abstand zwischen dem Träger des Flächenelements und der Oberfläche der Anzeigeeinrichtung ergab. Insgesamt ergab sich für den Klebeverbund dabei also die in Fig. 3 dargestellte Anordnung.

Für die eigentliche Prüfung der Eignung des Flächenelements wurde ein auf der Anzeigefläche der Flüssigkristallanzeigeeinrichtung wiedergegebenes Bild durch den Klebeverbund hindurch betrachtet und qualitativ beurteilt. Die hierbei für die unterschiedlichen Proben und die unterschiedlichen Klebefolien als Abstandhalter erhaltenen qualitativen Ergebnisse sind in untenstehender Tabelle 5 zusammengefasst.

Tabelle 5

| Abstand [$\mu$m] | Probe 1B | Probe 2B | Probe 3B |
|---|---|---|---|
| 48 | hohe Transparenz klares Bild | hohe Transparenz klares Bild | hohe Transparenz klares Bild |

(fortgesetzt)

| Abstand [μm] | Probe 1B | Probe 2B | Probe 3B |
|---|---|---|---|
| 100 | hohe Transparenz klares Bild | hohe Transparenz klares Bild | hohe Transparenz klares Bild |
| 205 | hohe Transparenz klares Bild | hohe Transparenz klares Bild | hohe Transparenz klares Bild |
| 450 | hohe Transparenz klares Bild | hohe Transparenz klares Bild | hohe Transparenz klares Bild |
| 1150 | reduzierte Transparenz leicht diffuses Bild | reduzierte Transparenz leicht diffuses Bild | reduzierte Transparenz leicht diffuses Bild |

Wie aus Tabelle 5 erkennbar ist, ist die Transparenz des Flächenelements im Anzeigesystem bei den untersuchten Proben für alle Abstände hoch. Besonders hoch ist sie für kleinere mittlere Abstände zwischen der Oberfläche der LCD-Anzeige und der Oberfläche des Trägers.

Wird der Abstand zu groß, verliert das auf dem Anzeigefeld dargestellte Bild an Klarheit und wirkt leicht diffus, wie insbesondere das für einen Abstand von 1150 μm erhaltene Ergebnis zeigt. Zu kürzeren Abständen hin ist der Abstand nicht aus optischen Gründen limitiert. Vielmehr ist es erforderlich, einen Mindestabstand von 40 μm einzuhalten, um zu vermeiden, dass bei mechanischen Einwirkungen auf die Glasscheibe diese aufgrund ihrer elastischen Verformung über das Flächenelement mit der Oberfläche der Anzeigeeinrichtung in Kontakt tritt und letztere dabei beschädigt.

Demzufolge ist das erfindungsgemäße Flächenelement hervorragend als optisch hochtransparente Splittersicherungseinrichtung einsetzbar.

**Patentansprüche**

1. Ausschließlich einseitig verklebbares Flächenelement umfassend eine flächenförmige erste Funktionsschicht, eine flächenförmige zweite Funktionsschicht und eine flächenförmige Klebeschichtung (2),
wobei die eine der beiden Funktionsschichten als Träger (1) und die andere der beiden Funktionsschichten als Anpassungsmittel (3) ausgebildet ist,
die zweite Funktionsschicht parallel zu ihrer Hauptausdehnung eine erste und eine zweite Seitenfläche aufweist,
die erste Funktionsschicht an der ersten Seitenfläche der zweiten Funktionsschicht angeordnet ist, und
die Klebeschichtung (2) an der zweiten Seitenfläche der zweiten Funktionsschicht angeordnet ist und zu einem dauerhaften Verbinden des Flächenelements mit einem bei Bruch mittels des Flächenelements zusammenzuhaltenden spröden Flächenkörper angepasst ist,
**dadurch gekennzeichnet, dass**
die erste Funktionsschicht einen Brechungsindex $n_d$(20 °C) aus einem Bereich von 1,20 bis 1,40 aufweist, bevorzugt aus einem Bereich von 1,23 bis 1,37,
die zweite Funktionsschicht einen Brechungsindex $n_d$(20 °C) aus einem Bereich von 1,48 bis 1,60 aufweist, besonders bevorzugt aus einem Bereich von 1,53 bis 1,59, und
die Klebeschichtung (2) einen Brechungsindex $n_d$(20 °C) aus einem Bereich von mindestens 1,43 bis 1,60 aufweist, bevorzugt aus einem Bereich von 1,47 bis 1,58, besonders bevorzugt aus einem Bereich von 1,47 bis 1,50.

2. Flächenelement nach Anspruch 1, **dadurch gekennzeichnet, dass** die erste Funktionsschicht als Anpassungsmittel (3) ausgebildet ist und die zweite Funktionsschicht als Träger (1).

3. Flächenelement nach Anspruch 1, **dadurch gekennzeichnet, dass** die erste Funktionsschicht als Träger (1) ausgebildet ist und die zweite Funktionsschicht als Anpassungsmittel (3).

4. Flächenelement nach einem der Ansprüche 1 bis 3, **dadurch gekennzeichnet, dass** das Anpassungsmittel (3) ein Antireflexionsmittel ist, das zum Vermindern des Anteils des an der Außenseite des Flächenelements reflektierten sichtbaren Lichts eingerichtet ist.

5. Flächenelement nach Anspruch 4, **dadurch gekennzeichnet, dass** das Antireflexionsmittel einen mehrlagigen Aufbau aufweist.

6. Flächenelement nach Anspruch 4, **dadurch gekennzeichnet, dass** das Antireflexionsmittel einen einlagigen Aufbau aufweist.

**7.** Flächenelement nach Anspruch 6, **dadurch gekennzeichnet, dass** das Antireflexionsmittel eine Antireflexionsbeschichtung mit einer Schichtdicke von mindestens 0,2 nm und höchstens 500 nm ist, bevorzugt mit einer Schichtdicke von mindestens 1,0 nm und höchstens 50 nm.

**8.** Flächenelement nach einem der Ansprüche 1 bis 7, **dadurch gekennzeichnet, dass** das Flächenelement vollflächig für sichtbares Licht höchsttransparent ausgebildet ist, wobei es für Licht einer Wellenlänge von 550 nm eine Transmission von mehr als 86 % aufweist, bevorzugt von mehr als 88 % und besonders bevorzugt von mehr als 92 %.

**9.** Flächenelement nach einem der Ansprüche 1 bis 8, **dadurch gekennzeichnet, dass** die erste Funktionsschicht stabil gegenüber mechanischer Beanspruchung ausgebildet ist.

**10.** Flächenelement nach einem der Ansprüche 1 bis 9, **dadurch gekennzeichnet, dass** die Klebeschichtung (2) eine Haftklebemasse umfasst.

**11.** Flächenelement nach einem der Ansprüche 1 bis 10 **dadurch gekennzeichnet, dass** das Flächenelement einen temporären Träger (4) umfasst, wobei der temporäre Träger (4) an der Klebeschichtung (2) angeordnet und mit der Klebeschichtung (2) rückstandsfrei ablösbar verbunden ist.

**12.** Verwendung eines Flächenelements nach einem der Ansprüche 1 bis 10 als Splittersicherungseinrichtung für einen spröden Flächenkörper, die bei Bruch des Flächenkörpers den Flächenkörper zumindest im wesentlichen zusammen hält und so einer Vereinzelung von Bruchstücken des Flächenkörpers entgegenwirkt.

**13.** Klebeverbund aus einem Flächenelement nach einem der Ansprüche 1 bis 10 und einem Durchsichtelement (5), **dadurch gekennzeichnet, dass** das Durchsichtelement (5) mit dem Flächenelement über die Klebeschichtung (2) des Flächenelements dauerhaft verbunden ist.

**14.** Klebeverbund nach Anspruch 13, **dadurch gekennzeichnet, dass** das Durchsichtelement (5) zumindest einen Teilbereich aus Glas aufweist, der als spröder Flächenkörper für das Verbinden mit dem Flächenelement angepasst ist.

**15.** Verwendung eines Klebeverbunds nach Anspruch 13 oder 14 als Beschädigungsschutzvorrichtung für eine Anzeigeeinrichtung, die einer Beschädigung der Anzeigeeinrichtung bei äußerer mechanischer Einwirkung entgegenwirkt.

**16.** Anzeigesystem mit einem Klebeverbund nach Anspruch 13 oder 14 und einer Anzeigeeinrichtung, **dadurch gekennzeichnet, dass** der Klebeverbund im Anzeigesystem derart angeordnet ist, dass die Seite des Klebeverbunds, an der das Flächenelement angeordnet ist, zu der Seite der Anzeigeeinrichtung hin gewandt ist, die zur Anzeige der anzuzeigenden Informationen angepasst ist.

**17.** Anzeigesystem nach Anspruch 16, **dadurch gekennzeichnet, dass** das Flächenelement und die zur Anzeige von Informationen angepasste Seite der Anzeigeeinrichtung derart zueinander beabstandet angeordnet sind, dass der mittlere Abstand mindestens 40 μm und höchstens 510 μm beträgt, insbesondere mindestens 50 μm und höchstens 400 μm beträgt.

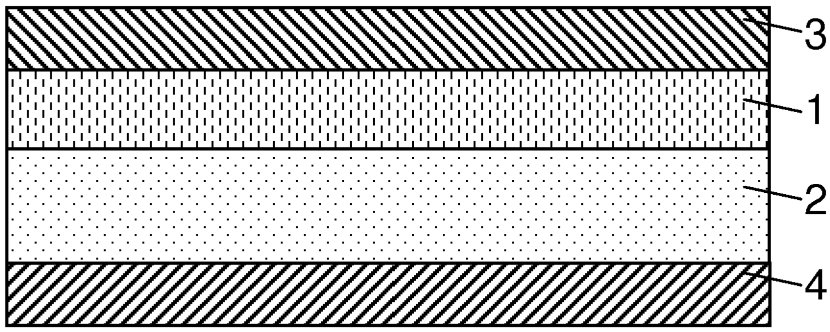


Fig. 1

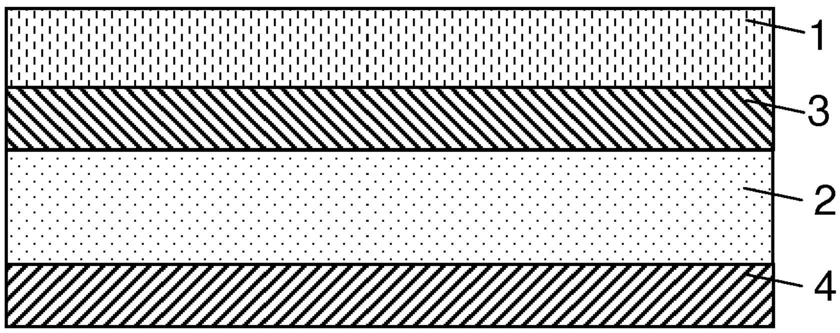


Fig. 2

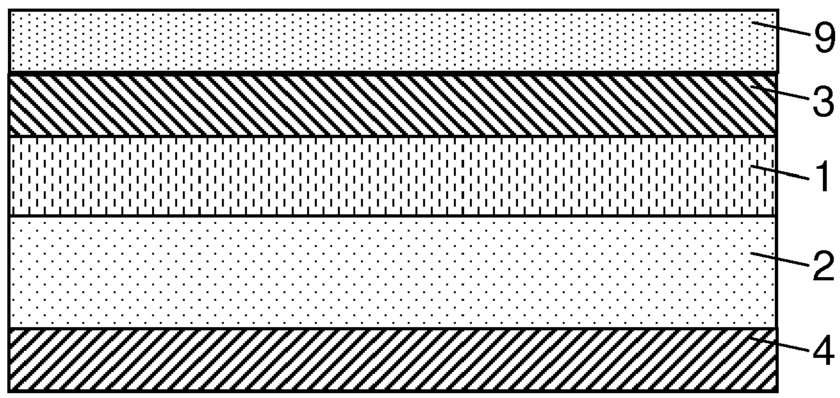


Fig. 3

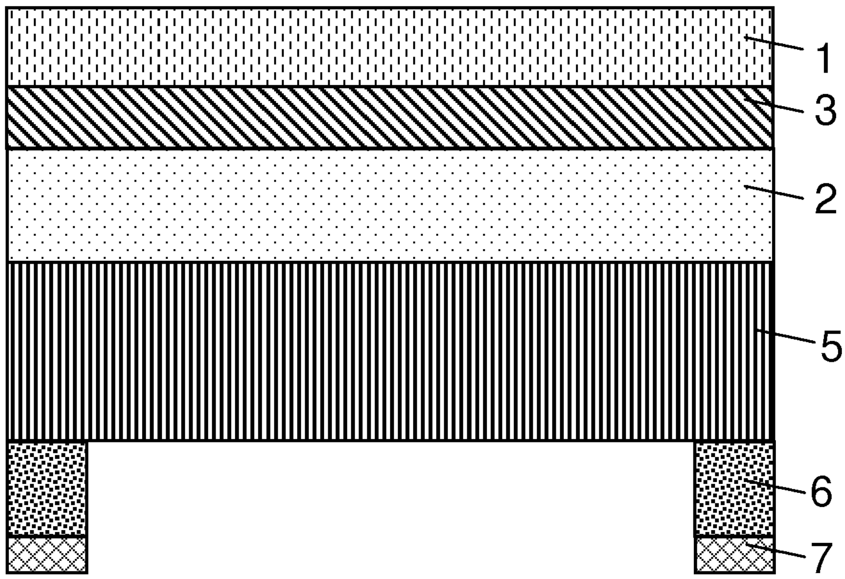


Fig. 4

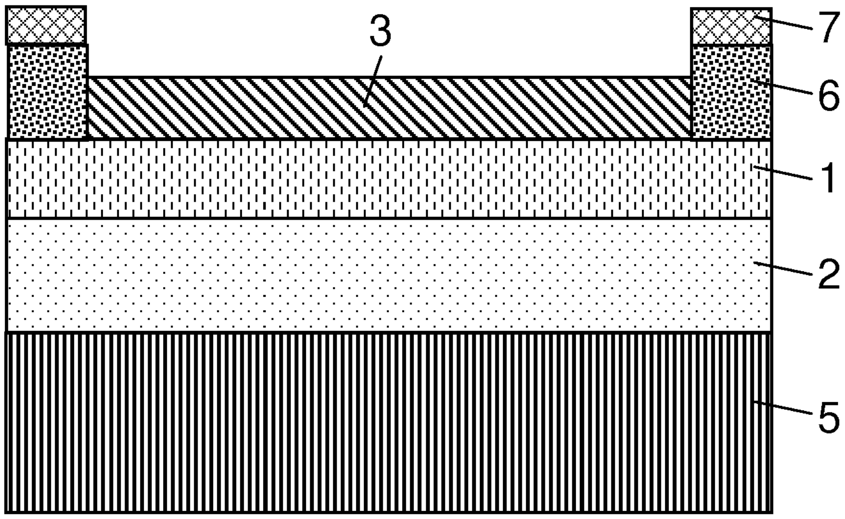


Fig. 5

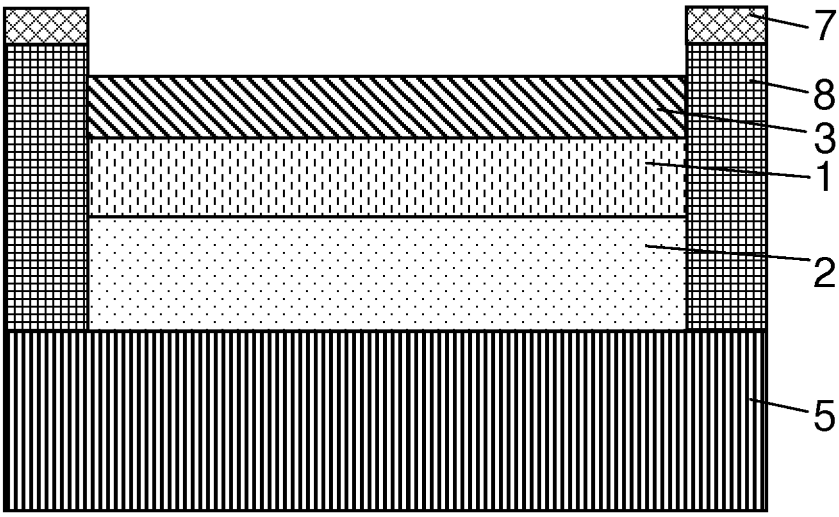


Fig. 6

Europäisches Patentamt
European Patent Office
Office européen des brevets

## EUROPÄISCHER TEILRECHERCHENBERICHT

der nach Regel 63 des Europäischen Patentübereinkommens für das weitere Verfahren als europäischer Recherchenbericht gilt

Nummer der Anmeldung
EP 08 16 1159

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | WO 2004/000550 A (FUJI PHOTO FILM CO LTD [JP]; FUKUDA KENICHI [JP]; MATSUFUJI AKIHIRO [J) 31. Dezember 2003 (2003-12-31)<br>* Zusammenfassung *<br>* Seite 2, Zeilen 16-19 *<br>* Seite 26, Zeile 12 - Seite 28, Zeile 19 *<br>* Seite 35, Zeilen 4-8 *<br>* Seite 38, Zeile 21 - Seite 39, Zeile 8; Beispiele *<br>----- | 1-17 | INV.<br>C09J7/02<br>C09J9/00<br>B32B17/10<br>B32B27/06 |
| X | WO 2006/006265 A (PANAC CO LTD [JP]; NIHON DENSHI SEIKI CO LTD [JP]; KATO JUNICHI [JP];) 19. Januar 2006 (2006-01-19)<br>* das ganze Dokument * | 1-17 | |
| P,X | -& US 2007/275200 A1 (KATO JUNICHI [JP] ET AL) 29. November 2007 (2007-11-29)<br>* Zusammenfassung *<br>* Absatz [0059]; Ansprüche 12,13; Beispiel 1 *<br>-----<br>-/-- | 1-17 | |
| | | | RECHERCHIERTE SACHGEBIETE (IPC)<br>C09J<br>B32B |

### UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

3

| Recherchenort | Abschlußdatum der Recherche | Prüfer |
|---|---|---|
| München | 12. Dezember 2008 | Meier, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04E09)

Europäisches Patentamt
European Patent Office
Office européen des brevets

**EUROPÄISCHER TEILRECHERCHENBERICHT**

Nummer der Anmeldung
EP 08 16 1159

| EINSCHLÄGIGE DOKUMENTE | | | KLASSIFIKATION DER ANMELDUNG (IPC) |
|---|---|---|---|
| Kategorie | Kennzeichnung des Dokuments mit Angabe, soweit erforderlich der maßgeblichen Teile | Betrifft Anspruch | |
| P,A | WO 2008/012167 A (TESA AG [DE]; HUSEMANN MARC [DE]; STORBECK REINHARD [DE]) 31. Januar 2008 (2008-01-31) * Zusammenfassung * * Seite 4, Zeile 1 - Seite 29, Zeile 20; Ansprüche 1,3-8; Beispiele * ----- | 1-17 | |
| A | WO 01/60607 A (3M INNOVATIVE PROPERTIES CO [US]) 23. August 2001 (2001-08-23) * Zusammenfassung * ----- | 1-17 | |
| | | | RECHERCHIERTE SACHGEBIETE (IPC) |

3

EPO FORM 1503 03.82 (P04C12)

Europäisches Patentamt
European Patent Office
Office européen des brevets

**UNVOLLSTÄNDIGE RECHERCHE**
**ERGÄNZUNGSBLATT C**

Nummer der Anmeldung
EP 08 16 1159

Nicht recherchierte Ansprüche:
1-17

Grund für die Beschränkung der Recherche:

Der vorliegende Anspruch 1 bezieht sich auf ein verklebbares Flächenelement, welches lediglich durch eine gewünschte Funktion definiert ist und daher das Erfordernis der Klarheit nach Art. 84 EPÜ nicht erfüllt. Die Definition des beanspruchten Gegenstandes durch ein zu erreichendes Ergebnis, nämlich die Kombination dreier Werte für die Brechungsindices der a) ersten Funktionsschicht/Trägerschicht, b) zweiten Funktionsschicht und c) der Klebeschicht, erlaubt es nicht, den Schutzumfang des Anspruchs zu bestimmen. Die Tatsache, dass jede Substanz einem Screeningverfahren unterzogen werden könnte, kann diesen Einwand nicht ausräumen, da der Fachmann im Voraus keine Kenntnis hat ob die Substanz unter den beanspruchten Schutzbereich fallen würde, mit Ausnahme der in der Beschreibung offenbarten Substanzen, siehe Beispiele . Ein unzumutbarer Aufwand wäre erforderlich, um willkürlich ausgewählte Materialien für die Klebeschciht und die Funktionsschichten dem Screeningverfahren zu unterziehen. Zudem werden durch die jetzige Definition von Anspruch 1 auch kombinationen von Klebeschicht und Funktionsschichtmaterialien umfasst, die zum Zeitpunkt der Anmeldung noch nicht existent waren. Die Verletzung der einschlägigen Erfordernisse ist so schwerwiegend, dass eine sinnvolle Recherche des ganzen beanspruchten Gegenstandes nicht durchgeführt werden konnte (R. 63 EPÜ und Richtlinien B-VIII, 3).

Die Recherche von Anspruch 1-17 wurde deshalb auf die deutlich offenbarten Verbindungen der Beispiele beschränkt, sowie, falls diese Verbindungen ein wesentliches gemeinsames Strukturmerkmal aufweisen, auf eine aus der Anmeldung ableitbaren Verallgemeinerung dieses Strukturmerkmals. Insbesondere wurde die Recherche auf dreischichtige Aufbauten enthaltend eine PET Trägerfolie mit einem Klebstoff auf der Basis eines Acrylats beschränkt.

## ANHANG ZUM EUROPÄISCHEN RECHERCHENBERICHT ÜBER DIE EUROPÄISCHE PATENTANMELDUNG NR.

EP 08 16 1159

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-12-2008

| Im Recherchenbericht angeführtes Patentdokument | Datum der Veröffentlichung | Mitglied(er) der Patentfamilie | Datum der Veröffentlichung |
|---|---|---|---|
| WO 2004000550 A | 31-12-2003 | AU 2003241186 A1 | 06-01-2004 |
| | | CN 1662373 A | 31-08-2005 |
| | | EP 1515845 A1 | 23-03-2005 |
| | | TW 258595 B | 21-07-2006 |
| | | US 2006056030 A1 | 16-03-2006 |
| WO 2006006265 A | 19-01-2006 | KR 20070048190 A | 08-05-2007 |
| | | US 2007275200 A1 | 29-11-2007 |
| US 2007275200 A1 | 29-11-2007 | WO 2006006265 A1 | 19-01-2006 |
| | | KR 20070048190 A | 08-05-2007 |
| WO 2008012167 A | 31-01-2008 | DE 102006035786 A1 | 13-03-2008 |
| WO 0160607 A | 23-08-2001 | AT 324259 T | 15-05-2006 |
| | | AT 366657 T | 15-08-2007 |
| | | AU 3478901 A | 27-08-2001 |
| | | CA 2399230 A1 | 23-08-2001 |
| | | DE 60119086 T2 | 12-10-2006 |
| | | DE 60129362 T2 | 13-03-2008 |
| | | EP 1263587 A1 | 11-12-2002 |
| | | JP 2003523846 T | 12-08-2003 |
| | | MX PA02007866 A | 10-02-2003 |
| | | US 2003049436 A1 | 13-03-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4874671 A
- WO 9801478 A1
- US 4581429 A
- WO 9813392 A1
- EP 735052 A1
- WO 9624620 A1
- WO 9844008 A1
- DE 19949352 A1
- EP 824110 A1
- EP 0824111 A1
- EP 826698 A1
- EP 841346 A1
- EP 850957 A1
- US 5945491 A
- US 5854364 A
- US 5789487 A


### In der Beschreibung aufgeführte Nicht-Patentliteratur


- Photoinitiation, Photopolymerization and Photocuring: Fundamentals and Applications. Hanser-Verlag, 1995
- **CARROY et al.** Chemistry and Technology of UV and EB Formulation for Coatings, Inks and Paints. SITA, 1994
- Handbook of Pressure Sensitive Adhesive Technology. 1989
- **T. G. FOX.** *Bull. Am. Phys. Soc.,* 1956, vol. 1, 123
- **HOUBEN-WEYL.** Methoden der Organischen Chemie. vol. E 19a, 60-147
- *Macromolecules,* 1995, vol. 28, 7886
- **FOUASSIER.** Photoinititation, Photopolymerization and Photocuring: Fundamentals and Applications. Hanser-Verlag, 1995
- *Journal of American Chemical Society,* 1999, vol. 121 (16), 3904